# EUROPEAN PATENT APPLICATION

(11) **EP 4 481 074 A1**
(43) Date of publication of application: **25.12.2024**
(21) Application number: 23811917.6
(22) Date of filing: 26.05.2023
(51) Int. Cl.: C22B 26/12, C22B 3/06, C22B 3/08, C22B 3/10, C22B 3/20, C22B 3/22, C22B 3/26, C22B 3/28, C22B 3/30, C22B 3/38, C22B 3/44, C22B 7/00, C22B 21/00, C22B 23/00, C22B 47/00, C25B 1/04, C25B 1/16, C25B 1/26, C25B 1/46, H01M 10/54

(54) **METHOD FOR RECOVERING LITHIUM FROM WASTE LITHIUM ION BATTERIES**

(30) Priority: 27.05.2022 JP 2022086680; 27.05.2022 JP 2022086681; 27.05.2022 JP 2022086682; 27.05.2022 JP 2022086683; 27.05.2022 JP 2022086684; 27.05.2022 JP 2022086685; 27.05.2022 JP 2022086686; 27.05.2022 JP 2022086687; 27.05.2022 JP 2022086688; 27.05.2022 JP 2022086689; 27.05.2022 JP 2022086690; 27.05.2022 JP 2022086691; 27.05.2022 JP 2022086692
(71) Applicant: Asaka Riken Co., Ltd., Koriyama-shi, Fukushima 963-0725 (JP)
(72) Inventor: YAMADA, Keita, Koriyama-shi, Fukushima 963-0725 (JP); SAKUMA, Yukio, Koriyama-shi, Fukushima 963-0725 (JP); HIRAOKA, Taro, Koriyama-shi, Fukushima 963-0725 (JP)
(74) Representative: Schön, Christoph
(86) International application number: PCT/JP2023/019813
(87) International publication number: WO 2023/229045

(57) **Abstract**

An object of the present invention is to provide a method for recovering lithium from waste lithium-ion batteries that can recover lithium at a high recovery rate. The method for recovering lithium from waste lithium-ion batteries, the method including: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solvent extraction step of separating at least one metal excluding lithium from a solution obtained in the neutralization step by organic solvent extraction to obtain an alkali mixed salt aqueous solution; a separation step of separating each of a lithium salt and a salt of at least one selected from the group consisting of sodium and potassium from the alkali mixed salt aqueous solution; and a lithium recovery step of recovering lithium from a first lithium salt aqueous solution obtained in the separation step.

## Description

### Technical Field

The present invention relates to a method for recovering lithium from waste lithium-ion batteries.

### Background Art

In recent years, along with the widespread use of lithium-ion batteries, methods for recovering valuable metals such as cobalt, nickel, manganese, and lithium from waste lithium-ion batteries and reusing them as materials for the lithium-ion batteries have been investigated.

Conventionally, when recovering the valuable metals from the waste lithium-ion batteries, it has been carried out to separate and refine cobalt, nickel, manganese, and lithium by a wet process from the powder containing the valuable metals obtained by, for example, crushing and classifying the waste lithium-ion batteries with or without heating treatment (roasting) (for example, see Patent Literatures 1 and 2).

Note that, in the present invention, waste lithium-ion batteries mean used lithium-ion batteries that have reached the end of their useful life as battery products, lithium-ion batteries discarded as defective products and the like in the production process, and residual positive electrode material and negative electrode material and the like used for productization in the production process. The powder containing a positive electrode and a negative electrode obtained from the waste lithium-ion batteries is referred to as the active material powder. The impurity means metals that need not be recovered among the metals contained in the active material powder.

### Citation List

### Patent Literature

Patent Literature 1: Japanese Patent No. 6835820
Patent Literature 2: Japanese Patent No. 6869444

### Summary of Invention

### Technical Problem

However, in the existing wet process, a compound other than the lithium compound, the recovery target, is used as the alkali source, which increases the concentration of cations other than lithium and simultaneously decreases the concentration of lithium ions. As a result, in the conventional wet process, the recovery rate of lithium, the target, is significantly decreased. Further, the conventional wet process has inconveniences that the mineral acid used in dissolving the active material powder and the compound used as the alkali source are drained as salts, and there is no technique to recycle the mineral acid and the compound used as the alkali source with circulation.

In recent years, there has been a demand for a method for recovering lithium from waste lithium-ion batteries that solves such inconveniences, that can recover lithium at a high recovery rate, and that can reuse the salt produced in the recovery process as a mineral acid and an alkali preferably in this process, but such a method has not been provided. An object to be solved by the present invention is to provide a method for recovering lithium from waste lithium-ion batteries that can recover lithium at a high recovery rate, and that can reuse the salt produced in the recovery process as a mineral acid and an alkali preferably in this process.

### Solution to Problem

The present inventors have made intensive investigation in view of the above object, and found that, by adding at least one selected from the group consisting of sodium hydroxide and potassium hydroxide into a solution obtained by dissolving active material powder with a mineral acid and by further separating a lithium salt aqueous solution and an aqueous solution of a salt of at least one selected from the group consisting of sodium and potassium, the mineral acid obtained by membrane-electrolyzing a preferably separated aqueous solution of a salt of at least one selected from the group consisting of sodium and potassium and at least one selected from the group consisting of sodium hydroxide and potassium hydroxide can be reused. The present invention has been completed based on these findings.

The present invention relates to a method for recovering lithium from waste lithium-ion batteries (hereinafter, which may be referred to as "the lithium recovery method 1 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; an alkali metal hydroxide re-addition step of re-adding at least one selected from the group consisting of sodium hydroxide and potassium hydroxide to a solution obtained in the neutralization step; a separation step of separating each of a lithium salt and a salt of at least one selected from the group consisting of sodium and potassium from an alkali mixed salt aqueous solution obtained in the alkali metal hydroxide re-addition step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 2 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solid-liquid separation step of solid-liquid separating an insoluble product and a solution A obtained in the neutralization step; a manganese extraction step of adding an organophosphorus-compound extraction solvent to the solution A to extract and separate manganese and to obtain a solution B; a cobalt extraction step of adding an organophosphorus-compound extraction solvent to the solution B to extract and separate cobalt and to obtain a solution C; a nickel extraction step of adding an organophosphorus-compound extraction solvent to the solution C to extract and separate nickel; a separation step of separating each of a lithium salt and a salt of at least one selected from the group consisting of sodium and potassium from an alkali mixed salt aqueous solution obtained in the nickel extraction step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 3 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solid-liquid separation step of solid-liquid separating an insoluble product and a solution A obtained in the neutralization step; a manganese extraction step of adding an organophosphorus-compound extraction solvent to the solution A to extract and separate manganese and to obtain a solution D; a nickel extraction step of adding a hydroxime extraction solvent to the solution D to extract and separate nickel and to obtain a solution E; a cobalt extraction step of adding an organophosphorus-compound extraction solvent to the solution E to extract and separate cobalt; a separation step of separating each of a lithium salt and at least one salt of sodium and potassium from an alkali mixed salt aqueous solution obtained in the cobalt extraction step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 4 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solid-liquid separation step of solid-liquid separating an insoluble product and a solution A obtained in the neutralization step; a cobalt extraction step of adding an organic-amine-compound extraction solvent to the solution A to extract and separate cobalt and to obtain a solution F; a manganese extraction step of adding an organophosphorus-compound extraction solvent to the solution F to extract and separate manganese and to obtain a solution G; a nickel extraction step of adding an organophosphorus-compound extraction solvent to the solution G to extract and separate nickel and to obtain a first lithium salt aqueous solution; a separation step of separating each of a lithium salt and a salt of at least one selected from the group consisting of sodium and potassium from an alkali mixed salt aqueous solution obtained in the nickel extraction step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 5 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solid-liquid separation step of solid-liquid separating an insoluble product and a solution A obtained in the neutralization step; a cobalt extraction step of adding an organic-amine-compound extraction solvent to the solution A to extract and separate cobalt and to obtain a solution H; a nickel extraction step of adding a hydroxime extraction solvent to the solution H to extract and separate nickel and to obtain a solution I; a manganese extraction step of adding an organophosphorus-compound extraction solvent to the solution I to extract and separate manganese and to obtain a first lithium salt aqueous solution; a separation step of separating each of a lithium salt and a salt of at least one selected from the group consisting of sodium and potassium from an alkali mixed salt aqueous solution obtained in the manganese extraction step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 6 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solid-liquid separation step of solid-liquid separating an insoluble product and a solution A obtained in the neutralization step; a nickel extraction step of adding a hydroxime extraction solvent to the solution A to extract and separate nickel and to obtain a solution J; a manganese extraction step of adding an organophosphorus-compound extraction solvent to the solution J to extract and separate manganese and to obtain a solution K; a cobalt extraction step of adding an organophosphorus-compound extraction solvent to the solution K to extract and separate cobalt and to obtain a first lithium salt aqueous solution; a separation step of separating each of a lithium salt and a salt of at least one selected from the group consisting of sodium and potassium from an alkali mixed salt aqueous solution obtained in the cobalt extraction step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 7 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solid-liquid separation step of solid-liquid separating an insoluble product and a solution A obtained in the neutralization step; a nickel extraction step of adding a hydroxime extraction solvent to the solution A to extract and separate nickel and to obtain a solution L; a cobalt extraction step of adding an organic-amine-compound extraction solvent to the solution L to extract and separate cobalt and to obtain a solution M; a manganese extraction step of adding an organophosphorus-compound extraction solvent to the solution M to extract and separate manganese and to obtain a first lithium salt aqueous solution; a separation step of separating each of a lithium salt and at least one salt of sodium and potassium from an alkali mixed salt aqueous solution obtained in the manganese extraction step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 8 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solvent extraction step of separating at least one metal excluding lithium by organic-solvent extraction among metals contained in the active material powder from a solution obtained in the neutralization step to obtain an alkali mixed salt aqueous solution as a residual liquid of the solvent extraction; a separation step of separating each of a lithium salt and a salt of at least one selected from the group consisting of sodium and potassium from the alkali mixed salt aqueous solution; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 9 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solvent extraction step of extracting at least one selected from the group consisting of iron, aluminum, manganese, cobalt, and nickel contained in the active material powder with an organic solvent by solvent extraction from a solution obtained in the neutralization step; a separation step of separating each of a lithium salt and a salt of at least one selected from the group consisting of sodium and potassium from an alkali mixed salt aqueous solution obtained in the solvent extraction step; and a lithium recovery step of recovering lithium from a first lithium salt aqueous solution obtained in the separation step, wherein, in the solvent extraction step, an aqueous solution containing at least one selected from the group consisting of sodium hydroxide and potassium hydroxide and the organic solvent are mixed, and then an alkali-containing organic solvent obtained by oil-water separation and a solution obtained in the neutralization step are mixed.

The present invention relates to a method for recovering lithium from waste lithium-ion batteries (hereinafter, which may be referred to as "the lithium recovery method 10 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a metal-sulfide removal step of mixing a solution obtained in the neutralization step and a sulfide at a pH in a range of 2 to 6 to produce a sulfide of at least one metal selected from the group consisting of copper, cadmium, lead, and mercury, and removing the metal sulfide; a separation step of separating each of a lithium salt and a salt of at least one selected from the group consisting of sodium and potassium from an alkali mixed salt aqueous solution obtained in the metal-sulfide removal step; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 11 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solvent extraction step of extracting at least one selected from the group consisting of iron, aluminum, manganese, cobalt, and nickel contained in the active material powder with an organic solvent by solvent extraction from a solution obtained in the neutralization step; a separation step of separating each of a lithium salt and a salt of at least one selected from the group consisting of sodium and potassium from an alkali mixed salt aqueous solution obtained in the solvent extraction step; a second membrane electrolysis step of membrane-electrolyzing an aqueous solution of a salt of at least one selected from the group consisting of sodium and potassium obtained in the separation step using an ion exchange membrane to obtain an alkali metal hydroxide aqueous solution; a carbonation step of carbonating a part of the alkali metal hydroxide aqueous solution; and a lithium recovery step of recovering lithium from a first lithium salt aqueous solution obtained in the separation step, wherein the alkali metal hydroxide aqueous solution obtained in the second membrane electrolysis step is reused in at least one step selected from the group consisting of the neutralization step, the solvent extraction step, and the separation step, and at least one selected from the group consisting of a mineral acid obtained by recovering gas produced in the second membrane electrolysis step and a mineral acid obtained in an anode chamber in the second membrane electrolysis step is reused in the dissolution step.

The present invention relates to a method for recovering lithium from waste lithium-ion batteries (hereinafter, which may be referred to as "the lithium recovery method 12 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solvent extraction step of extracting at least one selected from the group consisting of iron, aluminum, manganese, cobalt, and nickel contained in the active material powder with an organic solvent by solvent extraction from a solution obtained in the neutralization step; a nickel removal step of mixing a first alkali mixed salt aqueous solution obtained in the solvent extraction step and an alkali to remove nickel contained in the first alkali mixed salt aqueous solution, and obtaining a second alkali mixed salt aqueous solution; a separation step of separating each of a lithium salt and a salt of at least one selected from the group consisting of sodium and potassium from the second alkali mixed salt aqueous solution; and a lithium recovery step of recovering lithium from a first lithium salt aqueous solution obtained in the separation step.

The present invention relates to a method for recovering lithium from waste lithium-ion batteries (hereinafter, which may be referred to as "the lithium recovery method 13 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solvent extraction step of extracting at least one selected from the group consisting of iron, aluminum, manganese, cobalt, and nickel contained in the active material powder with an organic solvent by solvent extraction from a solution obtained in the neutralization step; a separation step of separating each of a lithium salt and a salt of at least one selected from the group consisting of sodium and potassium from an alkali mixed salt aqueous solution obtained in the solvent extraction step; and a carbonation step of carbonating a first lithium salt aqueous solution obtained in the separation step to obtain lithium carbonate.

The present invention relates to a method for recovering lithium from waste lithium-ion batteries (hereinafter, which may be referred to as "the lithium recovery method 14 of the present invention"), the method comprising: a dissolution step of dissolving active material powder obtained by pre-processing waste lithium-ion batteries in a mineral acid; a neutralization step of adding at least one selected from the group consisting of sodium hydroxide and potassium hydroxide to a solution obtained in the dissolution step; a solvent extraction step of extracting at least one selected from the group consisting of iron, aluminum, manganese, cobalt, and nickel contained in the active material powder with an organic solvent by solvent extraction from a solution obtained in the neutralization step; a separation step of separating each of a lithium salt and a salt of at least one selected from the group consisting of sodium and potassium from an alkali mixed salt aqueous solution obtained in the solvent extraction step; and a first membrane electrolysis step of membrane-electrolyzing a first lithium salt aqueous solution obtained in the separation step using an ion exchange membrane to obtain a lithium hydroxide aqueous solution.

The lithium recovery methods 1 to 10 and 12 to 14 of the present invention preferably further comprises: a second membrane electrolysis step of membrane-electrolyzing an aqueous solution of a salt of at least one selected from the group consisting of sodium and potassium obtained in the separation step using an ion exchange membrane to obtain an alkali metal hydroxide aqueous solution.

The alkali metal hydroxide aqueous solution obtained in the second membrane electrolysis step is preferably reused in at least one step selected from the group consisting of the neutralization step, the solvent extraction step, and the separation step.

In the lithium recovery methods 1 to 12 and 14 of the present invention, the lithium recovery step preferably includes a carbonation step of carbonating the first lithium salt aqueous solution obtained in the separation step to obtain lithium carbonate.

The lithium recovery step further includes a first membrane electrolysis step of membrane-electrolyzing the first lithium salt aqueous solution obtained in the separation step using an ion exchange membrane to obtain a lithium hydroxide aqueous solution, an acid, and a second lithium salt aqueous solution that is more dilute than the first lithium salt aqueous solution.

The second lithium salt aqueous solution is preferably concentrated and added to the first lithium salt aqueous solution.

The mineral acid preferably contains at least one selected from the group consisting of hydrochloric acid, sulfuric acid, and nitric acid, and more preferably contains hydrochloric acid.

Chlorine and hydrogen obtained by membrane-electrolyzing the first lithium salt aqueous solution using an ion exchange membrane are preferably reacted, and produced hydrochloric acid is used as the mineral acid.

The electric power used for the first membrane electrolysis step preferably includes electric power obtained by renewable energy, and more preferably includes at least one selected from the group consisting of electric power obtained by solar power generation, electric power obtained by wind power generation, and electric powder obtained by hydroelectric power generation.

In the lithium recovery methods 13 and 14 of the present invention, the separation step is preferably carried out by at least one selected from the group consisting of a lithium phosphate method, an evaporative concentration method, and a solvent extraction method.

The lithium recovery methods 13 and 14 of the present invention preferably further comprise a second membrane electrolysis step of membrane-electrolyzing an aqueous solution of a salt of at least one selected from the group consisting of sodium and potassium obtained in the separation step using an ion exchange membrane to obtain an alkali metal hydroxide aqueous solution, wherein the aqueous solution of a salt of at least one selected from the group consisting of sodium and potassium is concentrated, and the concentrated aqueous solution of a salt of at least one selected from the group consisting of sodium and potassium is electrolyzed in the second membrane electrolysis step.

### Advantageous Effect of Invention

The lithium recovery methods 1 to 14 of the present invention provide a method in which lithium can be recovered at a high recovery rate, and a salt produced in the recovery process can be reused as a mineral acid and an alkali preferably in this process.

### Brief Description of Drawings

FIG. 1 is an explanatory drawing showing the configuration of an aspect of the lithium recovery method 1 of the present invention.
FIG. 2 is an explanatory drawing showing the configuration of another aspect of the lithium recovery method 1 of the present invention.
FIG. 3 is an explanatory drawing showing the configuration of an aspect of the lithium recovery methods 2 to 9 of the present invention.
FIG. 4 is an explanatory drawing showing the configuration of another aspect of the lithium recovery methods 2 to 9 of the present invention.
FIG. 5 is an explanatory drawing showing the configuration of an aspect of the lithium recovery method 10 of the present invention.
FIG. 6 is an explanatory drawing showing the configuration of another aspect of the lithium recovery method 10 of the present invention.
FIG. 7 is an explanatory drawing showing the configuration of an aspect of the lithium recovery method 11 of the present invention.
FIG. 8 is an explanatory drawing showing the configuration of another aspect of the lithium recovery method 11 of the present invention.
FIG. 9 is an explanatory drawing showing the configuration of an aspect of the lithium recovery method 12 of the present invention.
FIG. 10 is an explanatory drawing showing the configuration of another aspect of the lithium recovery method 12 of the present invention.
FIG. 11 is an explanatory drawing showing the configuration of an aspect of the lithium recovery method 13 of the present invention.
FIG. 12 is an explanatory drawing showing the configuration of an aspect of the lithium recovery method 14 of the present invention.
FIG. 13 is an explanatory drawing showing the configuration of an aspect using the lithium phosphate method.
FIG. 14 is an explanatory drawing showing the configuration of another aspect using the lithium phosphate method.
FIG. 15 is an explanatory drawing showing the configuration of another aspect using the lithium phosphate method.
FIG. 16 is an explanatory cross-sectional view showing the structure of the ion exchange membrane electrolytic bath used in the first membrane electrolysis step of the lithium recovery methods 1 to 12 and 14 of the present invention.
FIG. 17 is an explanatory cross-sectional view showing the structure of the ion exchange membrane electrolytic bath used in the second membrane electrolysis step of the lithium recovery methods 1 to 14 of the present invention.

### Description of Embodiments

With reference to the accompanying drawings, the present invention will be described in further detail.

Note that "to" in a numerical range refers to "greater than or equal to and less than or equal to" and includes values of both the ends unless otherwise mentioned. When the numerical range is described, the upper limit and the lower limit can be appropriately combined, and a numerical range obtained by this combination is also disclosed.

Further, in the description of the drawings, a same reference sign is made to a same element, and an overlapped description is omitted. A size ratio in the drawings is exaggerated for convenience of the description, and may differ from an actual ratio.

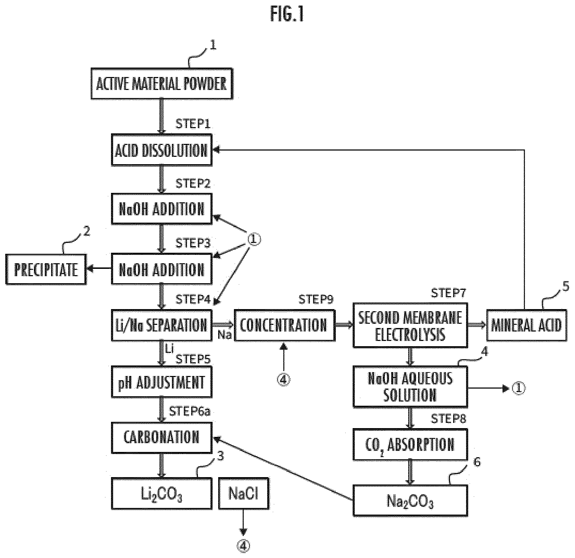

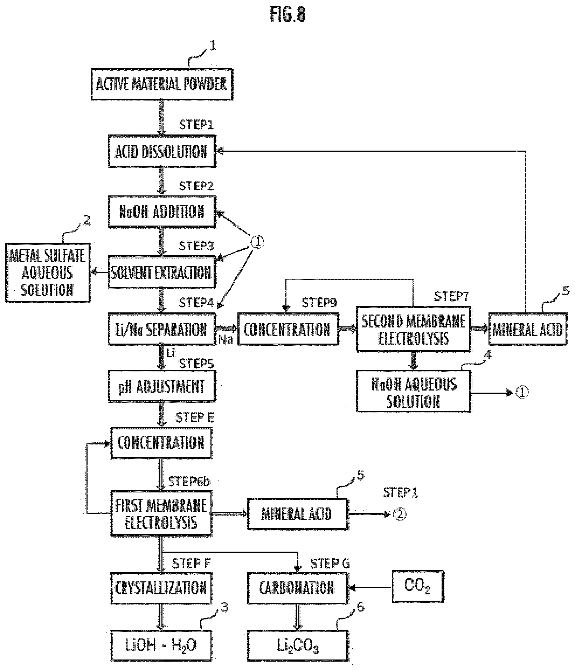

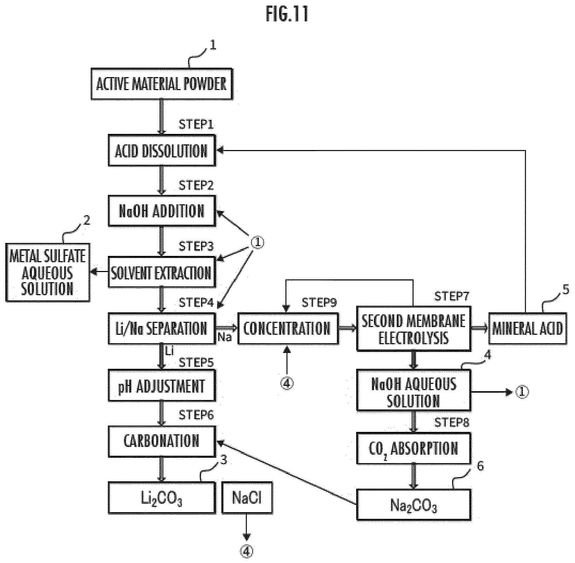

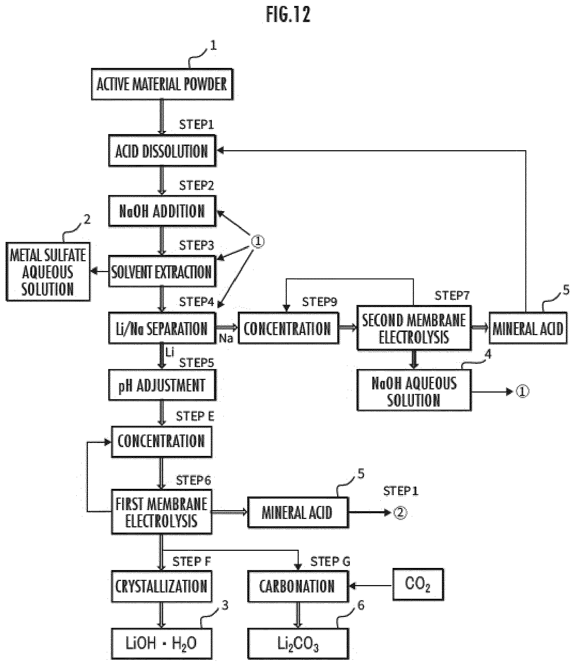

As shown in FIGS. 1 to 12, in the lithium recovery methods 1 to 14 of the present invention, active material powder 1 is used as the starting material.

### <Dissolution step>

The lithium recovery methods 1 to 14 of the present invention (FIGS. 1 to 12) comprise a dissolution step (STEP 1) in which the active material powder 1 obtained by pre-processing is dissolved in a mineral acid. The mineral acid preferably contains at least one selected from the group consisting of hydrochloric acid, sulfuric acid, and nitric acid, is more preferably at least one selected from the group consisting of hydrochloric acid, sulfuric acid, and nitric acid, further preferably hydrochloric acid, sulfuric acid, or nitric acid, and particularly preferably hydrochloric acid. Since the active material powder 1 contains valuable metals such as lithium, iron, aluminum, cobalt, nickel, and manganese, a solution of the valuable metals contained in the active material powder 1 can be obtained by dissolving the active material powder 1 in the mineral acid.

### <Neutralization step>

The lithium recovery methods 1 to 14 of the present invention comprise a neutralization step (STEP 2) in which at least one selected from the group consisting of sodium hydroxide and potassium hydroxide is added to the solution of the valuable metals obtained in the dissolution step. In FIGS. 1 to 17, the case where only sodium hydroxide is added as the alkali metal hydroxide is shown. The addition of at least one selected from the group consisting of sodium hydroxide and potassium hydroxide may be at least one of the following: addition of at least one solid selected from the group consisting of sodium hydroxide and potassium hydroxide, addition of at least one selected from the group consisting of a sodium hydroxide aqueous solution and a potassium hydroxide aqueous solution, and a mixed form thereof. The solution of the valuable metals is neutralized in the neutralization step.

Furthermore, there is a case where iron hydroxide and aluminum hydroxide are sequentially precipitated by the addition of at least one selected from the group consisting of sodium hydroxide and potassium hydroxide to the solution of the valuable metals, resulting in separation of iron and aluminum from the solution of the valuable metals.

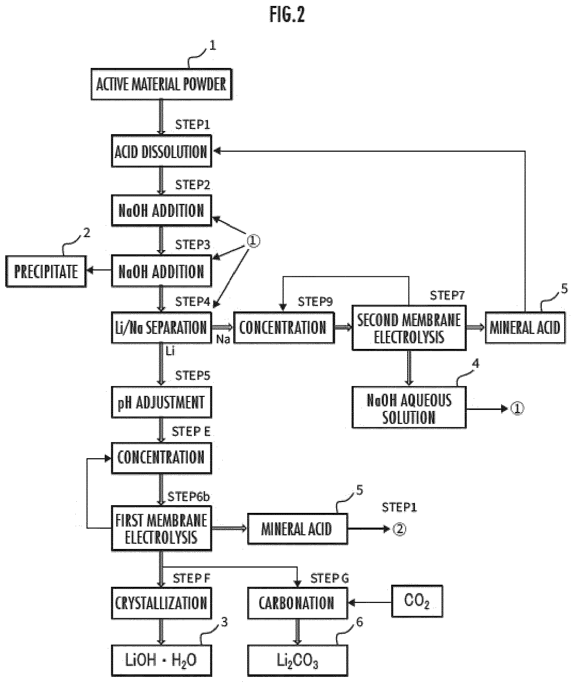

In the lithium recovery method 1 of the present invention (FIGS. 1 and 2), in the solution of the valuable metals after the neutralization, at least one selected from the group consisting of sodium hydroxide and potassium hydroxide is subsequently added again in STEP 3 (alkali metal hydroxide re-addition step). The valuable metals, for example, at least one selected from the group consisting of manganese, cobalt, and nickel in the solution are removed as a precipitate 2, and an alkali mixed salt aqueous solution containing lithium and at least one selected from the group consisting of sodium and potassium can be obtained as a filtrate. When two or more metals as the valuable metals are contained in the solution, the precipitate 2 may be a mixture of hydroxides of each of the two or more metals, or may be a hydroxide of a mixture of the two or more metals.

### <Extraction step>

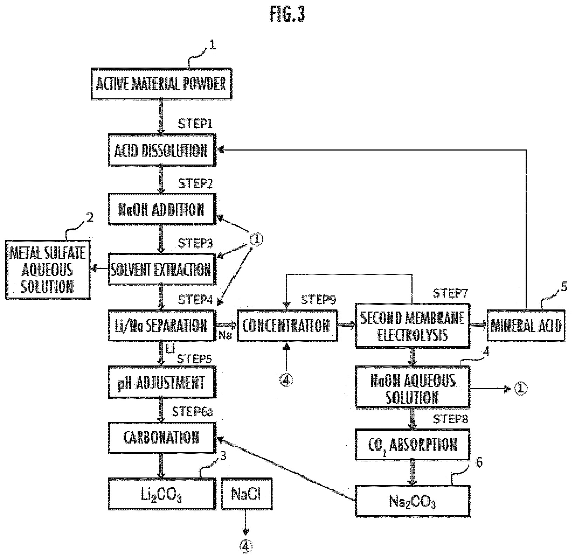

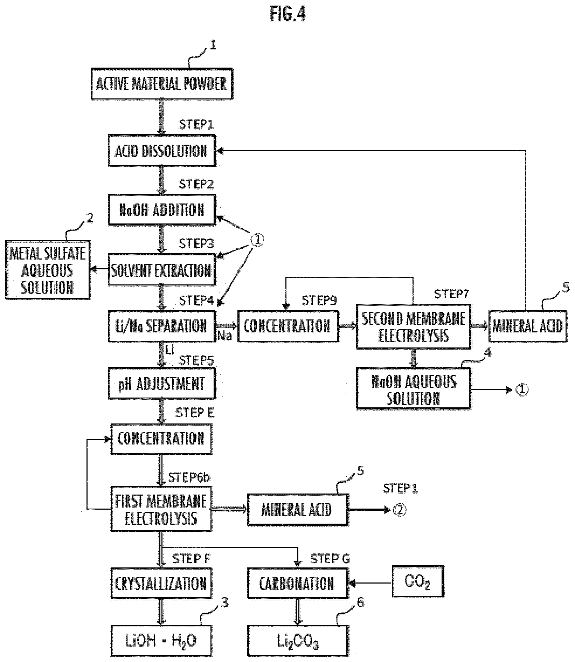

The lithium recovery methods 2 to 9 of the present invention (FIG. 3 and FIG. 4) comprise a solvent extraction step (STEP 3) in which the valuable metals contained in the active material powder 1 are extracted with an organic solvent by solvent extraction from the solution obtained in the neutralization step.

In the lithium recovery method 2 of the present invention, an insoluble product and a solution A produced from the neutralized solution of the valuable metals are solid-liquid separated. Into the solution A, an organophosphorus-compound extraction solvent is added to extract and separate manganese and to obtain a solution B (manganese extraction step 2). Into the solution B, an organophosphorus-compound extraction solvent is added to extract and separate cobalt and to obtain a solution C (cobalt extraction step 2). Into the solution C, an organophosphorus-compound extraction solvent is added to extract and separate nickel and to obtain a first lithium salt aqueous solution (nickel extraction step 2). These extraction steps can be easily managed with pH.

The solvent used in the manganese extraction step 2, the cobalt extraction step 2, and the nickel extraction step 2 is an organophosphorus compound such as a phosphate ester, a phosphonate ester, a phosphinic acid, and a phosphine oxide. These organophosphorus compounds are commercially available, and examples thereof include D2EHPA (di(2-ethylhexyl) phosphate) as an acidic phosphate ester, PC-88A manufactured by DAIHACHI CHEMICAL INDUSTRY CO., LTD. as the phosphonate ester, CYANEX272 manufactured by Solvay as the phosphinic acid, TBP (tributyl phosphate) as a neutral phosphate ester, and tri-n-octylphosphine (TOPO) as the phosphine oxide.

For example, D2EHPA is used in the manganese extraction step 2, and CYANEX272 is used in the cobalt extraction step 2 and the nickel extraction step 2 as the extraction solvent. CYANEX272 used in the cobalt extraction step 2 and the nickel extraction step has different pH.

In the lithium recovery method 2 of the present invention, manganese, cobalt, and nickel, excluding lithium, out of the valuable metals, can be separately solvent-extracted in this order, and removed as their respective metal sulfate aqueous solutions 2 to obtain the first lithium salt aqueous solution in the extraction step. In the case where hydrochloric acid is used for the acid dissolution in STEP 1, the lithium salt contained in the first lithium salt aqueous solution is lithium chloride.

In the lithium recovery method 3 of the present invention, an insoluble product and a solution A produced from the neutralized solution of the valuable metals are solid-liquid separated. Into the solution A, an organophosphorus-compound extraction solvent is added to extract and separate manganese and to obtain a solution D (manganese extraction step 3). Into the solution D, a hydroxime extraction solvent is added to extract and separate nickel and to obtain a solution E (nickel extraction step 3). Into the solution E, an organophosphorus-compound extraction solvent is added to extract and separate cobalt and to obtain a first lithium salt aqueous solution (cobalt extraction step 3).

The solvent used in the manganese extraction step 3 and the cobalt extraction step 3 is an organophosphorus compound such as a phosphate ester, a phosphonate ester, a phosphinic acid, and a phosphine oxide. These organophosphorus compounds are commercially available, and examples thereof include D2EHPA (di(2-ethylhexyl) phosphate) as an acidic phosphate ester, PC-88A manufactured by DAIHACHI CHEMICAL INDUSTRY CO., LTD. as the phosphonate ester, CYANEX272 manufactured by Solvay as the phosphinic acid, TBP (tributyl phosphate) as a neutral phosphate ester, and tri-n-octylphosphine (TOPO) as the phosphine oxide. The solvent used in the nickel extraction step 3 is a hydroxime. Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenylbenzyl ketone oxime (Acorga P-17).

For example, D2EHPA is used in the manganese extraction step 3, LIX 860 is used in the nickel extraction step 3, and CYANEX272 is used in the cobalt extraction step 3 as the extraction solvent.

In the lithium recovery method 4 of the present invention, an insoluble product and a solution A produced from the neutralized solution of the valuable metals are solid-liquid separated. Into the solution A, an organic-amine-compound extraction solvent is added to extract and separate cobalt and to obtain a solution F (cobalt extraction step 4). Into the solution F, an organophosphorus-compound extraction solvent is added to extract and separate manganese and to obtain a solution G (manganese extraction step 4). Into the solution G, an organophosphorus-compound extraction solvent is added to extract and separate nickel and to obtain a first lithium salt aqueous solution (nickel extraction step 4).

In the cobalt extraction step 4, when a cobalt chloride complex is formed at an appropriate concentration, a cobalt salt solution can be separated with a high purity. In this case, since the solution F contains no cobalt or almost no cobalt, the purity of the metal salt solution obtained in each of the manganese extraction step 4 and the nickel extraction step 4 also becomes high.

The solvent used in the cobalt extraction step 4 is an organic amine compound. Examples of the organic amine compound include Primene (R) JM-T, which is a primary amine manufactured by The Dow Chemical Company, Amberlite (R) LA-2, which is a secondary amine manufactured by Sigma-Aldrich, Alamine 336 (trioctylamine), which is a tertiary amine manufactured by Sigma-Aldrich, and Aliquat (R) 336, which is a quaternary ammonium salt manufactured by Sigma-Aldrich. The solvent used in the manganese extraction step 4 and the nickel extraction step 4 is an organophosphorus compound such as a phosphate ester, a phosphonate ester, a phosphinic acid, and a phosphine oxide. These organophosphorus compounds are commercially available, and examples thereof include D2EHPA (di(2-ethylhexyl) phosphate) as an acidic phosphate ester, PC-88A manufactured by DAIHACHI CHEMICAL INDUSTRY CO., LTD. as the phosphonate ester, CYANEX272 manufactured by Solvay as the phosphinic acid, TBP (tributyl phosphate) as a neutral phosphate ester, and tri-n-octylphosphine (TOPO) as the phosphine oxide.

For example, trioctylamine is used in the cobalt extraction step 4, D2EHPA is used in the manganese extraction step 4, and CYANEX272 is used in the nickel extraction step 4 as the extraction solvent.

In the lithium recovery method 5 of the present invention, an insoluble product and a solution A produced from the neutralized solution of the valuable metals are solid-liquid separated. Into the solution A, an organic-amine-compound extraction solvent is added to extract and separate cobalt and to obtain a solution H (cobalt extraction step 5). Into the solution H, a hydroxime extraction solvent is added to extract and separate nickel and to obtain a solution I (nickel extraction step 5). Into the solution I, an organophosphorus-compound extraction solvent is added to extract and separate manganese and to obtain a first lithium salt aqueous solution (manganese extraction step 5).

In the cobalt extraction step 5, when a cobalt chloride complex is formed at an appropriate concentration, a cobalt salt solution can be separated with a high purity. In this case, since the solution H contains no cobalt or almost no cobalt, the purity of the metal salt solution obtained in each of the nickel extraction step 5 and the manganese extraction step 5 also becomes high.

The solvent used in the cobalt extraction step 5 is an organic amine compound. Examples of the organic amine compound include Primene (R) JM-T, which is a primary amine manufactured by The Dow Chemical Company, Amberlite (R) LA-2, which is a secondary amine manufactured by Sigma-Aldrich, Alamine 336 (trioctylamine), which is a tertiary amine manufactured by Sigma-Aldrich, and Aliquat (R) 336, which is a quaternary ammonium salt manufactured by Sigma-Aldrich. The solvent used in the nickel extraction step 5 is a hydroxime. Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenylbenzyl ketone oxime (Acorga P-17). The solvent used in the manganese extraction step 5 is an organophosphorus compound such as a phosphate ester, a phosphonate ester, a phosphinic acid, and a phosphine oxide. These organophosphorus compounds are commercially available, and examples thereof include D2EHPA (di(2-ethylhexyl) phosphate) as an acidic phosphate ester, PC-88A manufactured by DAIHACHI CHEMICAL INDUSTRY CO., LTD. as the phosphonate ester, CYANEX272 manufactured by Solvay as the phosphinic acid, TBP (tributyl phosphate) as a neutral phosphate ester, and tri-n-octylphosphine (TOPO) as the phosphine oxide.

For example, trioctylamine is used in the cobalt extraction step 5, LIX 860 is used in the nickel extraction step 5, and D2EHPA is used in the manganese extraction step as the extraction solvent.

In the lithium recovery method 6 of the present invention, an insoluble product and a solution A produced from the neutralized solution of the valuable metals are solid-liquid separated. Into the solution A, a hydroxime extraction solvent is added to extract and separate nickel and to obtain a solution J (nickel extraction step 6). Into the solution J, an organophosphorus-compound extraction solvent is added to extract and separate manganese and to obtain a solution K (manganese extraction step 6). Into the solution K, an organophosphorus-compound extraction solvent is added to extract and separate cobalt and to obtain a first lithium salt aqueous solution (cobalt extraction step 6).

The solvent used in the nickel extraction step 6 is a hydroxime. Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenylbenzyl ketone oxime (Acorga P-17). The solvent used in the manganese extraction step 6 and the cobalt extraction step 6 is an organophosphorus compound such as a phosphate ester, a phosphonate ester, a phosphinic acid, and a phosphine oxide. These organophosphorus compounds are commercially available, and examples thereof include D2EHPA (di(2-ethylhexyl) phosphate) as an acidic phosphate ester, PC-88A manufactured by DAIHACHI CHEMICAL INDUSTRY CO., LTD. as the phosphonate ester, CYANEX272 manufactured by Solvay as the phosphinic acid, TBP (tributyl phosphate) as a neutral phosphate ester, and tri-n-octylphosphine (TOPO) as the phosphine oxide.

For example, LIX 860 is used in the nickel extraction step 6, D2EHPA is used in the manganese extraction step 6, and CYANEX272 is used in the cobalt extraction step 6 as the extraction solvent.

In the lithium recovery method 7 of the present invention, the acid solution is neutralized with lithium hydroxide to solid-separate a produced insoluble product and a solution A. Into the solution A, a hydroxime extraction solvent is added to extract and separate nickel and to obtain a solution L (nickel extraction step 7). Into the solution L, an organic amine extraction solvent is added to extract and separate cobalt and to obtain a solution M (cobalt extraction step 7). Into the solution M, an organophosphorus-compound extraction solvent is added to extract and separate manganese and to obtain a first lithium salt aqueous solution (manganese extraction step 7).

The solvent used in the nickel extraction step 7 is a hydroxime. Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenyl benzyl ketone oxime (Acorga P-17). The solvent used in the cobalt extraction step 7 is an organic amine compound. Examples of the organic amine compound include Primene (R) JM-T, which is a primary amine manufactured by The Dow Chemical Company, Amberlite (R) LA-2, which is a secondary amine manufactured by Sigma-Aldrich, Alamine 336 (trioctylamine), which is a tertiary amine manufactured by Sigma-Aldrich, and Aliquat (R) 336, which is a quaternary ammonium salt manufactured by Sigma-Aldrich. The solvent used in the manganese extraction step 7 is an organophosphorus compound such as a phosphate ester, a phosphonate ester, a phosphinic acid, and a phosphine oxide. These organophosphorus compounds are commercially available, and examples thereof include D2EHPA (di(2-ethylhexyl) phosphate) as an acidic phosphate ester, PC-88A manufactured by DAIHACHI CHEMICAL INDUSTRY CO., LTD. as the phosphonate ester, CYANEX272 manufactured by Solvay as the phosphinic acid, TBP (tributyl phosphate) as a neutral phosphate ester, and tri-n-octylphosphine (TOPO) as the phosphine oxide.

For example, LIX 860 is used in the nickel extraction step 7, trioctylamine is used in the cobalt extraction step 7, and CYANEX272 is used in the manganese extraction step 7 as the extraction solvent.

In the lithium recovery method 8 of the present invention, the extraction step includes a first extraction step in which iron, aluminum, manganese, cobalt, or nickel is extracted with a first organic solvent from the solution of the valuable metals. The pH of a homogeneous mixed solution of the solution of the valuable metals and the first organic solvent is adjusted by adding an alkali such as at least one selected from the group consisting of sodium hydroxide and potassium hydroxide to obtain a first metal-containing organic phase and a first extraction residual liquid in this first extraction step.

The extraction step may include a second extraction step in which valuable metals that have not been extracted in the first extraction step are extracted with a second organic solvent from the first extraction residual liquid. The pH of a homogeneous mixed solution of the first extraction residual liquid and the second organic solvent is adjusted by adding an alkali such as at least one selected from the group consisting of sodium hydroxide and potassium hydroxide to obtain a second metal-containing organic phase and a second extraction residual liquid in this second extraction step.

The extraction step may include third to fifth extraction steps in which the valuable metals that have not been extracted in the first and second extraction steps are sequentially extracted from the second extraction residual liquid.

Examples of the organic solvent used in the extraction step include at least one selected from the group consisting of an organophosphorus compound such as a phosphate ester, a phosphonate ester, a phosphinic acid, and a phosphine oxide; a hydroxime; and an organic amine compound. The organic solvent preferably does not contain a reductant and an oxidant.

When the organic solvent does not contain an oxidant, the metal contained in the acid solution after the neutralization, specifically manganese, does not precipitate to cause clogging of piping. Further, a problem of deterioration of the organic solvent due to the oxidant also does not occur.

The organophosphorus compound is commercially available, and examples thereof include D2EHPA (di(2-ethylhexyl) phosphate) as an acidic phosphate ester, PC-88A manufactured by DAIHACHI CHEMICAL INDUSTRY CO., LTD. as the phosphonate ester, CYANEX272 manufactured by Solvay as the phosphinic acid, TBP (tributyl phosphate) as a neutral phosphate ester, and tri-n-octylphosphine (TOPO) as the phosphine oxide. Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenylbenzyl ketone oxime (Acorga P-17). Examples of the organic amine compound include Primene (R) JM-T, which is a primary amine manufactured by The Dow Chemical Company, Amberlite (R) LA-2, which is a secondary amine manufactured by Sigma-Aldrich, Alamine 336 (trioctylamine), which is a tertiary amine manufactured by Sigma-Aldrich, and Aliquat (R) 336, which is a quaternary ammonium salt manufactured by Sigma-Aldrich.

Back extraction with sulfuric acid is carried out on each of the iron-containing organic phase, aluminum-containing organic phase, manganese-containing organic phase, cobalt-containing organic phase, and nickel-containing organic phase to recover the metal sulfate (iron sulfate, aluminum sulfate, manganese sulfate, cobalt sulfate, and nickel sulfate) aqueous solutions 2.

In the lithium recovery method 9 of the present invention, in the solvent extraction step, an aqueous solution containing at least one selected from the group consisting of sodium hydroxide and potassium hydroxide and the organic solvent are mixed, and then the alkali-containing organic solvent obtained by oil-water separation and the solution obtained in the neutralization step are mixed. The alkali concentration in the aqueous solution containing at least one selected from the group consisting of sodium hydroxide and potassium hydroxide is low, and even when a large amount of the alkali aqueous solution is mixed with the organic solvent, the aqueous phase is separated from the alkali-containing organic solvent by oil-water separation. Therefore, the amount of the alkali-containing organic solvent used in the extraction step does not become large. As a result, dilution of the solution of the valuable metals with the liquid derived from the alkali metal hydroxide aqueous solution can be prevented.

Examples of the organic solvent used in the extraction step include bis(2-ethylhexyl) hydrogen phosphate, 2-ethylhexyl (2-ethylhexyl)phosphonate, and bis(2,4,4-trimethylpentyl)phosphinic acid. The organic solvent may be diluted with a hydrocarbon, such as kerosene.

Back extraction with sulfuric acid is carried out on each of the valuable-metal-containing organic phases obtained in the extraction step to recover each of the metal sulfate (iron sulfate, aluminum sulfate, manganese sulfate, cobalt sulfate, and nickel sulfate) aqueous solutions 2.

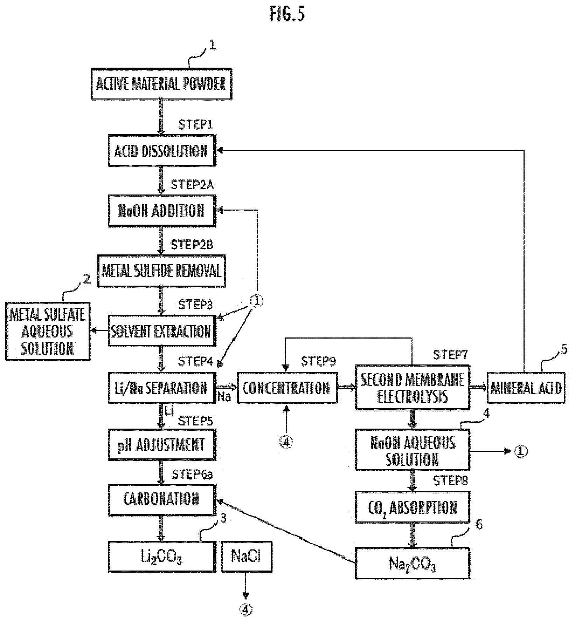

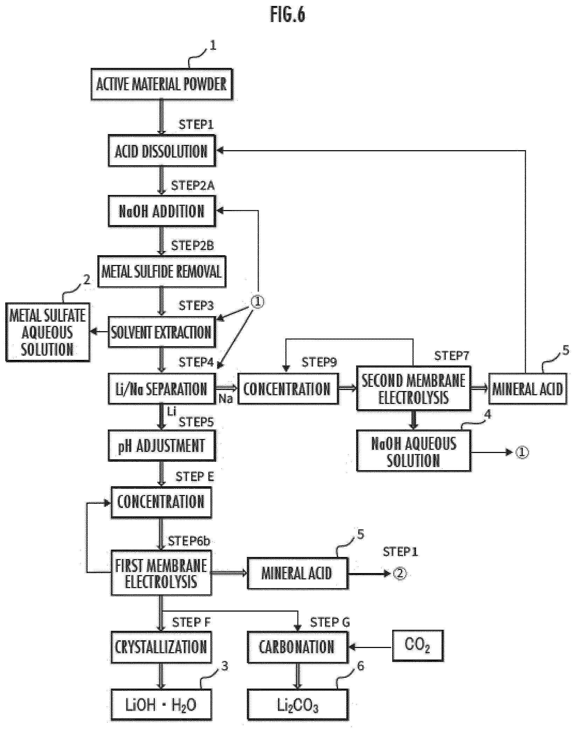

The lithium recovery method 10 of the present invention comprises a neutralization step (STEP 2A) in which at least one selected from the group consisting of sodium hydroxide and potassium hydroxide is added to the solution of the valuable metals obtained in the dissolution step. In FIGS. 5 and 6, the case where only sodium hydroxide is added as the alkali metal hydroxide is shown. The addition of at least one selected from the group consisting of sodium hydroxide and potassium hydroxide may be at least one of the following: addition of at least one solid selected from the group consisting of sodium hydroxide and potassium hydroxide, addition of at least one selected from the group consisting of a sodium hydroxide aqueous solution and a potassium hydroxide aqueous solution, and a mixed form thereof. The solution of the valuable metals is neutralized in the neutralization step.

Furthermore, there is a case where iron hydroxide and aluminum hydroxide are sequentially precipitated by the addition of at least one selected from the group consisting of sodium hydroxide and potassium hydroxide to the solution of the valuable metals, resulting in separation of iron and aluminum from the solution of the valuable metals.

The solution of the valuable metals is then mixed with the sulfide in STEP 2B at a pH in a range of 2 to 6 to produce a sulfide of at least one metal selected from the group consisting of copper, cadmium, lead, and mercury, resulting in removal of the metal sulfide. Examples of the sulfide mixed with the solution of the valuable metals include hydrogen sulfide gas, sodium hydrosulfide, and sodium sulfide.

The solution of the valuable metals in which the metal sulfide is removed is subjected to solvent extraction in STEP 3. In the solvent extraction, manganese, cobalt, and nickel, excluding lithium, out of the valuable metals, can be separately solvent-extracted, or iron and aluminum can be separated and removed as their respective metal sulfate aqueous solutions 2 to obtain a first lithium salt aqueous solution. In the case where hydrochloric acid is used for the acid dissolution in STEP 1, the lithium salt contained in the first lithium salt aqueous solution is lithium chloride.

Examples of the organic solvent used in the extraction step include bis(2-ethylhexyl) hydrogen phosphate, 2-ethylhexyl (2-ethylhexyl)phosphonate, and bis(2,4,4-trimethylpentyl)phosphinic acid. The organic solvent may be diluted with a hydrocarbon, such as kerosene.

Back extraction with sulfuric acid is carried out on each of the iron-containing organic phase, the aluminum-containing organic phase, the manganese-containing organic phase, the cobalt-containing organic phase, and the nickel-containing organic phase to recover the metal sulfate (iron sulfate, aluminum sulfate, manganese sulfate, cobalt sulfate, and nickel sulfate) aqueous solutions 2.

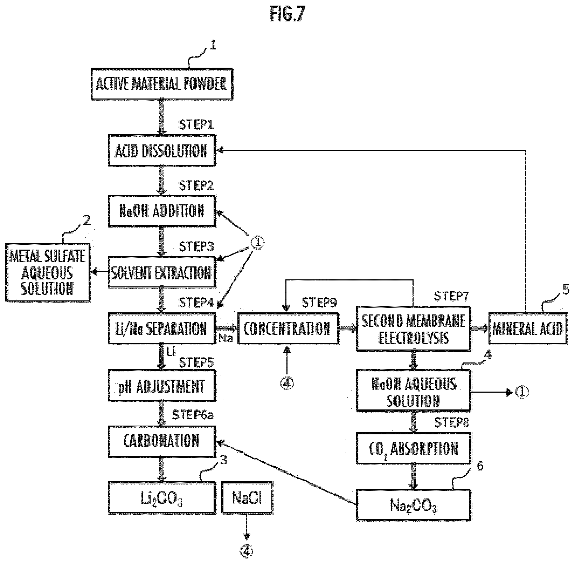

In the lithium recovery methods 11 to 14 of the present invention (FIGS. 7 to 12), the extraction step includes a first extraction step in which iron, aluminum, manganese, cobalt, or nickel is extracted with a first organic solvent from the solution of the valuable metals. The pH of a homogeneous mixed solution of the solution of the valuable metals and the first organic solvent is adjusted by adding an alkali such as at least one selected from the group consisting of sodium hydroxide and potassium hydroxide to obtain a first metal-containing organic phase and a first extraction residual liquid in this first extraction step.

The extraction step may comprise a second extraction step in which valuable metals that have not been extracted in the first extraction step are extracted with a second organic solvent from the first extraction residual liquid. The pH of a homogeneous mixed solution of the first extraction residual liquid and the second organic solvent is adjusted by adding an alkali such as at least one selected from the group consisting of sodium hydroxide and potassium hydroxide to obtain a second metal-containing organic phase and a second extraction residual liquid in this second extraction step.

The extraction step may comprise third to fifth extraction steps in which the valuable metals that have not been extracted in the first and second extraction steps are sequentially extracted from the second extraction residual liquid.

Examples of the organic solvent used in the extraction step include bis(2-ethylhexyl) hydrogen phosphate, 2-ethylhexyl (2-ethylhexyl)phosphonate, and bis(2,4,4-trimethylpentyl)phosphinic acid. The organic solvent may be diluted with a hydrocarbon, such as kerosene.

Back extraction with sulfuric acid is carried out on each of the iron-containing organic phase, the aluminum-containing organic phase, the manganese-containing organic phase, the cobalt-containing organic phase, and the nickel-containing organic phase to recover the metal sulfate (iron sulfate, aluminum sulfate, manganese sulfate, cobalt sulfate, and nickel sulfate) aqueous solutions 2.

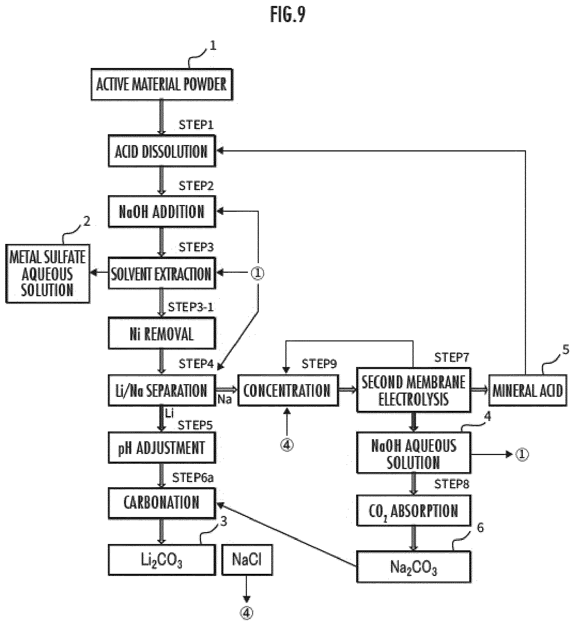

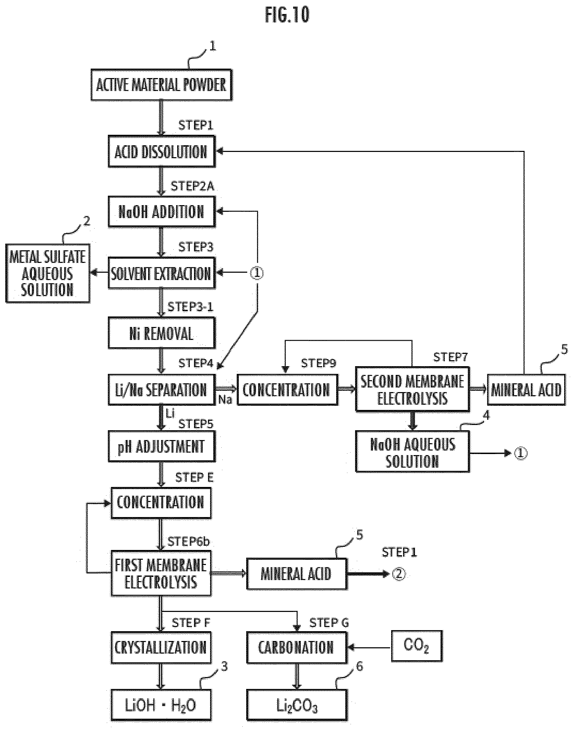

In the lithium recovery method 12 of the present invention (FIGS. 9 and 10), the first lithium salt aqueous solution and an alkali are mixed, the pH of this aqueous solution is adjusted to preferably 8 to 14, more preferably 10 to 12, and a trace amount of nickel contained in the first lithium salt aqueous solution is removed as nickel hydroxide to obtain a second alkali mixed salt aqueous solution (STEP 3-1). The alkali mixed with the first lithium salt aqueous solution preferably contains at least one selected from the group consisting of lithium, sodium, potassium, rubidium, cesium, and francium, more preferably contains at least one selected from the group consisting of lithium, sodium, and potassium, and is further preferably at least one selected from the group consisting of lithium, sodium, and potassium. The alkali may be a solid or an aqueous solution. The nickel hydroxide is separated from the second alkali mixed salt aqueous solution in the solid-liquid separation step such as filtration. In the solid-liquid separation step for the nickel hydroxide, a flocculant may be used.

### <Separation step>

The lithium recovery methods 1 to 14 of the present invention comprise a separation step (STEP 4) in which each of lithium obtained in the extraction step, a lithium salt from an alkali metal mixed salt aqueous solution containing at least one selected from the group consisting of sodium and potassium, and a salt of at least one selected from the group consisting of sodium and potassium is separated.

The separation step is not limited to a specific method, and is preferably carried out by at least one of the lithium phosphate method, the evaporative concentration method, and the solvent extraction method.

### (Lithium phosphate method)

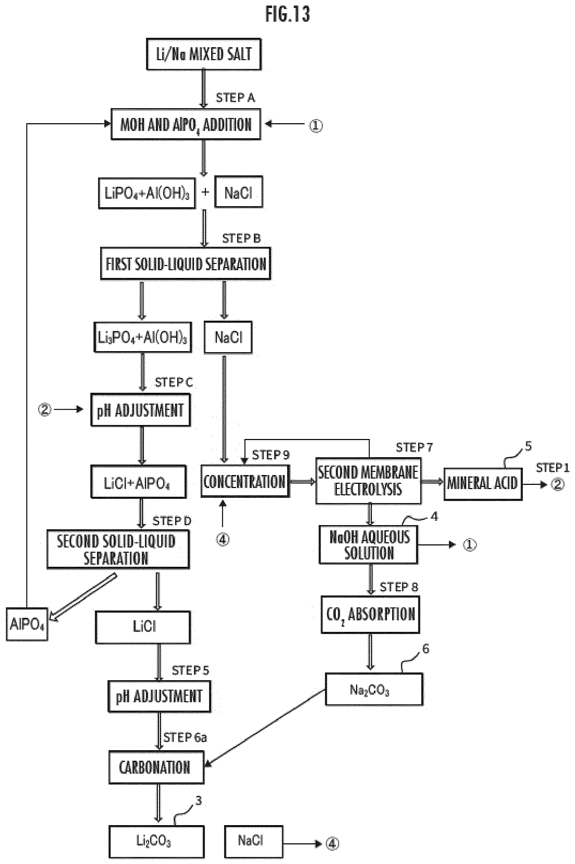

FIGS. 13 to 15 are used to describe the lithium phosphate method. The lithium phosphate method includes a phosphorylation step (STEP A) in which aluminum phosphate and an alkali metal hydroxide (MOH) aqueous solution of at least one selected from the group consisting of sodium hydroxide and potassium hydroxide are added to the alkali metal mixed salt aqueous solution to produce a solid product containing lithium phosphate and aluminum hydroxide. An alkali metal chloride (MCl) is dissolved in the aqueous liquid in which the solid product has been produced. The alkali metal hydroxide is preferably sodium hydroxide. In FIGS. 13 to 15, the case where only sodium hydroxide is used as the alkali metal is shown.

The lithium phosphate method includes a first solid-liquid separation (STEP B) in which the solid product that has been produced in the phosphorylation step is solid-liquid separated. Examples of the first solid-liquid separation step include filtration.

In the lithium phosphate method, the solid product that has been separated in the first solid-liquid separation step may be washed. The method includes a pH adjustment step (STEP C) in which a mineral acid is added to a suspension obtained by suspending the solid product in water to adjust the pH of the suspension to 2 to 3. The mineral acid is not limited to a specific mineral acid. The mineral acid preferably contains at least one selected from the group consisting of hydrochloric acid, sulfuric acid, and nitric acid. The mineral acid is more preferably at least one of hydrochloric acid, sulfuric acid, and nitric acid, further preferably hydrochloric acid, sulfuric acid, or nitric acid, and particularly preferably hydrochloric acid. In the case where the mineral acid is hydrochloric acid, the lithium salt is lithium chloride, and this case is described in FIGS. 13 to 15.

The lithium phosphate method includes a second solid-liquid separation step (STEP D) in which the aluminum phosphate and lithium salt aqueous solution obtained in the pH adjustment step are solid-liquid separated. Examples of the second solid-liquid separation step include filtration. Aluminum phosphate obtained in the second solid-liquid separation step can be solid-liquid separated in a short time, and aluminum phosphate that has been solid-liquid separated is reused in the phosphorylation step.

The pH of the lithium salt aqueous solution obtained in the second solid-liquid separation step is preferably adjusted in the pH adjustment step (STEP 5). Since the pH of the suspension has been adjusted to 2 to 3 in the pH adjustment step (STEP C), the pH of the lithium salt aqueous solution is 2 to 3, but the pH is preferably adjusted to 6 to 14, more preferably to 6 to 8 in the pH adjustment step (STEP 5). In this case, unreacted aluminum and phosphorus are precipitated, and the purity of the lithium salt aqueous solution becomes higher.

Preferably, a carbonation step (STEP 6a), which will be described later, is performed in which the first lithium salt aqueous solution having pH adjusted in the pH adjustment step (STEP 5) is carbonated to obtain lithium carbonate (FIG. 13). In an aqueous solution of a salt of at least one selected from the group consisting of sodium and potassium produced in the carbonation step, at least one selected from the group consisting of sodium chloride and potassium chloride, a trace amount of lithium chloride, and at least one selected from the group consisting of sodium carbonate and potassium carbonate are dissolved, and the pH of the aqueous solution of a salt of at least one selected from the group consisting of sodium and potassium is preferably around 12. When hydrochloric acid is added to the aqueous solution of a salt of at least one selected from the group consisting of sodium and potassium to adjust its pH to 5 or less, at least one selected from the group consisting of sodium carbonate and potassium carbonate is decomposed to produce carbon dioxide and water, and the aqueous solution becomes one in which at least one selected from the group consisting of sodium chloride and potassium chloride is dissolved. The aqueous solution may be concentrated in a concentration step (STEP 9), which will be described later. FIG. 13 describes the case where the concentration step is performed.

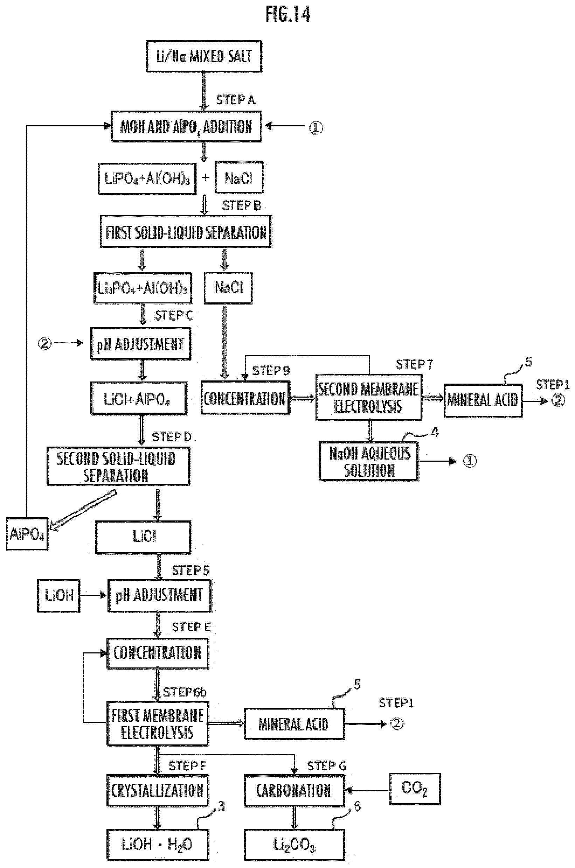

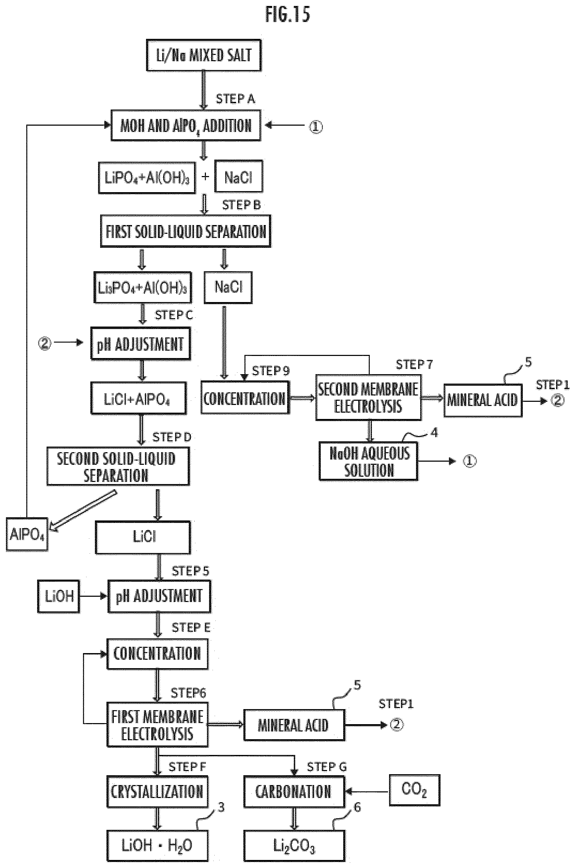

Preferably, a first membrane electrolysis step (STEP 6, STEP 6b), which will be described later, is carried out in which the lithium salt aqueous solution having pH adjusted in the pH adjustment step (STEP 5) is membrane-electrolyzed using an ion exchange membrane to obtain a lithium hydroxide aqueous solution (FIG. 14 and FIG. 15). The lithium salt aqueous solution may be concentrated in a first concentration step (STEP E) before being subjected to the first membrane electrolysis step. The first concentration step can be carried out using, for example, evaporative concentration, or a reverse osmosis membrane (RO membrane).

In the lithium phosphate method, the filtrate in which the alkali metal chloride is dissolved, separated in the first solid-liquid separation step, may be concentrated in a second concentration step (STEP 9), which will be described later.

### (Evaporative concentration method)

An alkali metal mixed salt aqueous solution of lithium and at least one selected from the group consisting of sodium and potassium is evaporatively concentrated, and at least one selected from the group consisting of a sodium salt and a potassium salt, such as at least one selected from the group consisting of sodium chloride and potassium chloride, is sequentially crystallized and separated from the alkali metal mixed salt aqueous solution. The at least one selected from the group consisting of a sodium salt and a potassium salt, such as at least one selected from the group consisting of sodium chloride and potassium chloride, that has been separated is dissolved in water, and a second membrane electrolysis step (STEP 7), which will be described later, is performed in which the aqueous solution of a salt of at least one selected from the group consisting of sodium and potassium is membrane-electrolyzed using an ion exchange membrane. The first lithium salt aqueous solution from which at least one selected from the group consisting of a sodium salt and a potassium salt has been separated is preferably subjected to the pH adjustment step (STEP 5) and further to the carbonation step (STEP 6a), in the same manner as for the first lithium salt aqueous solution obtained by the lithium phosphate method. In the case where the aqueous solution of a salt of at least one selected from the group consisting of sodium and potassium produced in the carbonation step is an aqueous solution in which at least one selected from the group consisting of sodium chloride and potassium chloride is dissolved as described above, the aqueous solution may be concentrated in a concentration step (STEP 9), which will be described later.

The first lithium salt aqueous solution is preferably subjected to the pH adjustment step (STEP 5) and the first concentration step (STEP E) in the same manner as for the first lithium salt aqueous solution obtained by the lithium phosphate method, and subjected to a first membrane electrolysis step (STEP 6, STEP 6b), which will be described later.

### (Solvent extraction method)

The pH of a homogeneous mixed solution of the mixed salt aqueous solution of lithium and at least one selected from the group consisting of sodium and potassium and an organic solvent for lithium extraction is preferably adjusted to the range of 5 to 9 by addition of an alkali, such as at least one selected from the group consisting of sodium hydroxide and potassium hydroxide, and a lithium-containing organic phase and an aqueous solution of a salt of at least one selected from the group consisting of sodium and potassium as an extraction residual liquid are obtained. Examples of the organic solvent for lithium extraction include bis(2-ethylhexyl) hydrogen phosphate. Scrubbing with a mineral acid is performed on the lithium-containing organic phase, and a first lithium salt aqueous solution is recovered. The first lithium salt aqueous solution is preferably subjected to the pH adjustment step (STEP 5) and further to the carbonation step (STEP 6a), in the same manner as for the first lithium salt aqueous solution obtained by the lithium phosphate method. In the case where the aqueous solution of a salt of at least one selected from the group consisting of sodium and potassium produced in the carbonation step is an aqueous solution in which at least one selected from the group consisting of sodium chloride and potassium chloride is dissolved as described above, the aqueous solution may be concentrated in a concentration step (STEP 9), which will be described later. The first lithium salt aqueous solution is preferably subjected to the pH adjustment step (STEP 5) and the first concentration step (STEP E) in the same manner as for the lithium salt aqueous solution obtained by the lithium phosphate method, and may be subjected to a first membrane electrolysis step (STEP 6, STEP 6b), which will be described later.

A second membrane electrolysis step (STEP 7), which will be described later, is performed in which the aqueous solution of a salt of at least one selected from the group consisting of sodium and potassium, in which at least one selected from the group consisting of a sodium salt and a potassium salt, such as at least one selected from the group consisting of sodium chloride and potassium chloride, is dissolved, from which lithium has been separated by extraction, is membrane-electrolyzed using an ion exchange membrane. The aqueous solution of a salt of at least one of sodium and potassium is concentrated using an evaporative concentration, a reverse osmosis membrane (RO membrane) or the like in a concentration step (STEP 9), which will be described later.

The lithium recovery methods 1 to 14 of the present invention may comprise a pH adjustment step (STEP 5) in which at least one selected from the group consisting of sodium hydroxide and potassium hydroxide is added to the first lithium salt aqueous solution obtained in the separation step by the solvent extraction method to adjust the pH of the first lithium salt aqueous solution. The pH of the first lithium salt aqueous solution is preferably adjusted to 8 to 14, and more preferably to 10 to 11.

### <Recovery of lithium>

### (Carbonation of first lithium salt aqueous solution)

The lithium recovery methods 1 to 12 of the present invention may comprise, as the lithium recovery step, a carbonation step (STEP 6a) in which the first lithium salt aqueous solution obtained in the separation step is carbonated to obtain lithium carbonate, for example. The lithium recovery method 13 of the present invention comprises the carbonation step (FIG. 13). In the carbonation step, an alkali metal carbonate (excluding lithium carbonate), such as at least one selected from the group consisting of sodium carbonate and potassium carbonate, obtained in a carbon dioxide absorption step (STEP 8) in which carbon dioxide is absorbed into an aqueous solution 4 in which at least one selected from the group consisting of sodium hydroxide and potassium hydroxide is dissolved, obtained in a second membrane electrolysis step, which will be described later, may be added to the first lithium salt aqueous solution.

The alkali metal of the alkali metal carbonate preferably contains at least one selected from the group consisting of sodium, potassium, rubidium, cesium, and francium. The alkali metal more preferably contains at least one selected from the group consisting of sodium and potassium, is further preferably at least one selected from the group consisting of sodium and potassium, and is particularly preferably sodium.

### (First membrane electrolysis step)

The lithium recovery methods 1 to 12 (FIG. 14) and 14 (FIG. 15) of the present invention comprise, as another lithium recovery step, for example, a first membrane electrolysis step (STEP 6b in FIG. 14, STEP 6 in FIG. 15) in which the first lithium salt aqueous solution obtained in the separation step and subjected to as necessary at least one selected from the group consisting of the pH adjustment step (STEP 5) and the first concentration step (STEP E) is membrane-electrolyzed using an ion exchange membrane to obtain a lithium hydroxide aqueous solution.

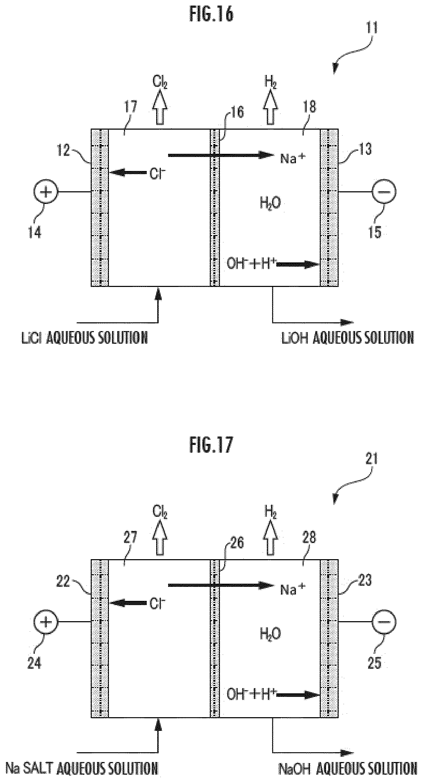

The first membrane electrolysis step can be carried out using, for example, a membrane electrolytic bath 11 shown in FIG. 16.

The membrane electrolytic bath 11 comprises an anode plate 12 on one inner side and a cathode plate 13 on the inner side opposite to the anode plate 12, and the anode plate 12 is connected to an anode 14 of the power source and the cathode plate 13 is connected to a cathode 15 of the power source. In addition, the membrane electrolytic bath 11 is compartmentalized by an ion exchange membrane 16 into an anode chamber 17 comprising the anode plate 12 and a cathode chamber 18 comprising the cathode plate 13.

In the membrane electrolytic bath 11, when the lithium salt aqueous solution dissolving lithium chloride is supplied to the anode chamber 17 to carry out electrolysis, chloride ions produce chlorine gas (Cl₂) on the anode plate 12. Meanwhile, lithium ions move through the ion exchange membrane 16 to the cathode chamber 18.

In the cathode chamber 18, water (H₂O) is ionized into hydroxide ions (OH⁻) and hydrogen ions (H⁺), and hydrogen ions produce hydrogen gas (H₂) on the cathode plate 13, while hydroxide ions and lithium ions produce a lithium hydroxide aqueous solution.

The electric power required for the first membrane electrolysis step preferably includes electric power obtained by renewable energy, more preferably includes at least one selected from the group consisting of electric power obtained by solar power generation, electric power obtained by wind power generation, and electric powder obtained by hydroelectric power generation, is further preferably electric powder obtained by renewable energy, and is particularly preferably at least one selected from the group consisting of electric power obtained by solar power generation, electric power obtained by wind power generation, and electric powder obtained by hydroelectric power generation.

The hydrogen gas (H₂) and chlorine gas (Cl₂) produced in the first membrane electrolysis step can be allowed to react with each other to obtain hydrochloric acid. Although not shown in FIG. 16, in the case where the lithium chloride aqueous solution contains sulfate ions, sulfuric acid can be obtained in the anode chamber 17. In the case where the lithium chloride aqueous solution contains nitrate ions, nitric acid can be obtained in the anode chamber 17. That is, a mineral acid 5 can be obtained in the first membrane electrolysis step, and the mineral acid 5 may be used for at least one of dissolution of the active material powder 1 in STEP 1 and pH adjustment in STEP C.

### (Separation of lithium hydroxide monohydrate)

The lithium recovery methods 1 to 12 and 14 of the present invention may comprise a crystallization step (STEP F) in which the lithium hydroxide aqueous solution obtained in the first membrane electrolysis step is evaporatively concentrated to crystallize lithium hydroxide monohydrate 3.

### (Separation of lithium carbonate)

The lithium recovery methods 1 to 12 and 14 of the present invention may comprise a carbonation step (STEP G) in which carbon dioxide is blown into the lithium hydroxide aqueous solution obtained in the first membrane electrolysis step to produce lithium carbonate 6.

### <Second membrane electrolysis step>

The lithium recovery methods 1 to 10 and 12 to 14 of the present invention may comprise a second membrane electrolysis step (STEP 7) in which the aqueous solution of a salt of at least one selected from the group consisting of sodium and potassium in which, for example, at least one selected from the group consisting of sodium chloride and potassium chloride is dissolved, obtained in the separation step, is membrane-electrolyzed using an ion exchange membrane to obtain an alkali metal hydroxide aqueous solution. The lithium recovery method 11 of the present invention comprises the second membrane electrolysis step. The second membrane electrolysis step can be carried out using a membrane electrolytic bath 21 shown in FIG. 17, for example.

The membrane electrolytic bath 21 comprises an anode plate 22 on one inner side and a cathode plate 23 on the inner side opposite to the anode plate 22, and the anode plate 22 is connected to an anode 24 of the power source and the cathode plate 23 is connected to a cathode 25 of the power source. In addition, the membrane electrolytic bath 21 is compartmentalized by an ion exchange membrane 26 into an anode chamber 27 comprising the anode plate 22 and a cathode chamber 28 comprising the cathode plate 23.

In the membrane electrolytic bath 21, when the aqueous solution of a salt of at least one selected from the group consisting of sodium and potassium is supplied to the anode chamber 27 to carry out membrane electrolysis, chloride ions produce chlorine gas (Cl₂) on the anode plate 22. Meanwhile, ions of at least one alkali metal selected from the group consisting of sodium ions and potassium ions move through the ion exchange membrane 26 to the cathode chamber 28.

In the cathode chamber 28, water (H₂O) is ionized into hydroxide ions (OH⁻) and hydrogen ions (H⁺), and hydrogen ions produce hydrogen gas (H₂) on the cathode plate 23, while hydroxide ions and at least one selected from the group consisting of sodium ions and potassium ions produce an alkali metal aqueous solution 4 in which at least one selected from the group consisting of sodium hydroxide and potassium hydroxide is dissolved.

The electric power required for the second membrane electrolysis step preferably includes electric power obtained by renewable energy, more preferably includes at least one selected from the group consisting of electric power obtained by solar power generation, electric power obtained by wind power generation, and electric powder obtained by hydroelectric power generation, is further preferably electric powder obtained by renewable energy, and is particularly preferably at least one selected from the group consisting of electric power obtained by solar power generation, electric power obtained by wind power generation, and electric powder obtained by hydroelectric power generation.

In the case where the aqueous solution of a salt of at least one selected from the group consisting of sodium and potassium contains chloride ions, the hydrogen gas (H₂) and chlorine gas (Cl₂) produced in the second membrane electrolysis step can be allowed to react with each other to obtain hydrochloric acid. In the case where the aqueous solution of a salt of at least one selected from the group consisting of sodium and potassium contains sulfate ions, sulfuric acid can be obtained in the anode chamber 27. In the case where the aqueous solution of a salt of at least one selected from the group consisting of sodium and potassium contains nitrate ions, nitric acid can be obtained in the anode chamber 27. That is, a mineral acid 5 can be obtained in the second membrane electrolysis step, and the mineral acid 5 is used for at least one selected from the group consisting of dissolution of the active material powder 1 in STEP 1 and pH adjustment in STEP C.

The lithium recovery methods 1 to 10 and 12 to 14 of the present invention may comprise a carbon dioxide absorption step (STEP 8) in which carbon dioxide is absorbed into the alkali metal hydroxide aqueous solution 4 in which at least one selected from the group consisting of sodium hydroxide and potassium hydroxide is dissolved, obtained in the second membrane electrolysis step. The lithium recovery method 11 of the present invention further comprises the carbon dioxide absorption step (STEP 8). At least one alkali metal carbonate 6 selected from the group consisting of sodium carbonate and potassium carbonate produced in the carbon dioxide absorption step may be used in the carbonation step (STEP 6a).

The alkali metal hydroxide aqueous solution 4 produced in the second membrane electrolysis step may be reused in at least one step selected from the group consisting of the alkali metal hydroxide addition step, the extraction step, the separation step by the lithium phosphate method, and the separation step by the solvent extraction method.

In the second membrane electrolysis step, the aqueous solution of a salt of at least one selected from the group consisting of sodium and potassium is membrane-electrolyzed, resulting in production of an aqueous solution of a salt of at least one selected from the group consisting of sodium and potassium that is more dilute than the aqueous solution of a salt of at least one selected from the group consisting of sodium and potassium. Then, the lithium recovery methods 1 to 14 of the present invention may comprise a concentration step (STEP 9) in which the dilute aqueous solution of a salt of at least one selected from the group consisting of sodium and potassium is concentrated and added to the aqueous solution of a salt of at least one selected from the group consisting of sodium and potassium obtained in the separation step. The concentration step can be carried out using, for example, an evaporative concentration, or a reverse osmosis membrane (RO membrane).

### [Examples]

Hereinafter, the present invention will be described in further detail based on Examples, but the present invention is not limited to them.

In Examples, various physical properties were measured or calculated as follows.

### <Metal content in lithium and sodium mixed salt aqueous solution and content of impurities in lithium carbonate>

Using Optima 8300 manufactured by PerkinElmer, Inc., the metal content in the lithium and sodium mixed salt aqueous solution and the content of impurities in lithium carbonate were measured with inductively coupled plasma-optical emission spectroscopy (ICP-OES).

### Example 1

Used lithium-ion batteries that have reached the end of their useful life as battery products were subjected to discharge treatment to discharge all remaining electric charges. Subsequently, the waste lithium-ion batteries were subjected to heating treatment (roasting) and then crushed with a hammer mill, and the housing, current collectors, and other components constituting the waste lithium-ion batteries were sieved to obtain active material powder. 500 g of the active material powder was dissolved in 3 L of 6 mol/L hydrochloric acid, and to the resulting solution was added 2.8 L of a 2 mol/L sodium hydroxide aqueous solution to neutralize the solution. 5.8 L of the neutralized solution and 5.8 L of bis(2,4,4-trimethylpentyl)phosphinic acid (Cyanex 272, the diluent was kerosene) as the extractant were mixed to solvent extract cobalt. To the mixed solution was added a 5 mol/L sodium hydroxide aqueous solution to adjust the pH to 4, and a cobalt-containing organic phase and a first extraction residual liquid were obtained. The cobalt-containing organic phase was scrubbed with dilute sulfuric acid and then back extracted with 1.5 mol/L sulfuric acid to obtain a cobalt sulfate solution. Using the same organic solvent as the organic solvent used in the cobalt extraction step, nickel was extracted from the first extraction residual liquid, and a lithium and sodium mixed salt aqueous solution was obtained as the extraction residual liquid. 3.5 g/L of lithium and 38.2 g/L of sodium were contained in the aqueous solution.

To 8.3 L of the aqueous solution was added 187 g of aluminum phosphate, followed by addition of sodium hydroxide to adjust the pH of the aqueous solution to 10.5, and the reaction was carried out for 2 hours to obtain a white slurry A. Next, the white slurry A was filtered and washed to obtain 614 g of a white cake A with a water content of 55%. The white cake A was suspended in 300 mL of pure water, 35 mass% hydrochloric acid was added to adjust the pH of the suspension to 2.5, and the suspension was heated to 60°C to carry out the reaction for 6 hours, thereby obtaining a white slurry B. The white slurry B was filtered and washed to obtain 467 g of a white cake B with a water content of 60% and a total of 1060 mL of the filtrate and washing water. Sodium hydroxide was added to 1060 mL of the filtrate and washing water to adjust the pH to 7, the mixture was filtered, and 680 g of a 35 mass% sodium carbonate aqueous solution was added to the resulting filtrate, which was heated to 60°C to carry out the reaction for 1 hour. The resulting solids were filtered and washed to obtain hydrous lithium carbonate. The hydrous lithium carbonate was dried at 500°C for 4 hours to obtain 129 g of lithium carbonate. The recovery rate of lithium was 83.5%. In the lithium carbonate, the content of sodium was less than 200 ppm, the content of aluminum was less than 10 ppm, the content of phosphorus was less than 10 ppm, and the content of water was less than 0.1% by mass.

10.5 L of the filtrate and washing water obtained by filtration and washing of the white slurry A (the sodium chloride concentration was 98 g/L) was evaporatively concentrated, and the resulting sodium chloride aqueous solution (the sodium chloride concentration was 300 g/L) was membrane-electrolyzed using an ion exchange membrane (Nafion N324 manufactured by The Chemours Company) under the conditions of a current density of 40 A/dm², an electrode area of 1.75 dm², and an energization time of 4 hours to obtain 1.6 kg of 21.2 mass% sodium hydroxide. Furthermore, by allowing the reaction product of the produced chlorine gas and hydrogen gas to be absorbed into water, 1.04 kg of 30 mass% hydrochloric acid was also obtained.

Sodium hydroxide produced in the membrane electrolysis step could be reused in the sodium hydroxide addition step (STEP 2), the extraction step (STEP 3), and the separation step (STEP 4). Furthermore, hydrochloric acid synthesized in the membrane electrolysis step could be reused in the dissolution step (STEP 1). The current efficiency in the membrane electrolysis step was 81.5%.

### Example 2

Used lithium-ion batteries that have reached the end of their useful life as battery products were subjected to discharge treatment to discharge all remaining electric charges. Subsequently, the waste lithium-ion batteries were subjected to heating treatment (roasting) and then crushed with a hammer mill, and the housing, current collectors, and other components constituting the waste lithium-ion batteries were sieved to obtain active material powder. 500 g of the active material powder was dissolved in 3 L of 6 mol/L hydrochloric acid, and to the resulting solution was added 2.8 L of a 2 mol/L sodium hydroxide aqueous solution to neutralize the solution. 5.8 L of the neutralized solution and 5.8 L of bis(2,4,4-trimethylpentyl)phosphinic acid (Cyanex 272, the diluent was kerosene) as the extractant were mixed to solvent extract cobalt. To the mixed solution was added a 5 mol/L sodium hydroxide aqueous solution to adjust the pH to 4, and a cobalt-containing organic phase and a first extraction residual liquid were obtained. The cobalt-containing organic phase was scrubbed with dilute sulfuric acid and then back extracted with 1.5 mol/L sulfuric acid to obtain a cobalt sulfate solution. Using the same organic solvent as the organic solvent used in the cobalt extraction step, nickel was extracted from the first extraction residual liquid, and a lithium and sodium mixed salt aqueous solution was obtained as the extraction residual liquid. 3.5 g/L of lithium and 38.2 g/L of sodium were contained in the aqueous solution.

To 8.3 L of the aqueous solution was added 187 g of aluminum phosphate, followed by addition of sodium hydroxide to adjust the pH of the aqueous solution to 10.5, and the reaction was carried out for 2 hours to obtain a white slurry A. Next, the white slurry A was filtered and washed to obtain 614 g of a white cake A with a water content of 55%. The white cake A was suspended in 300 mL of pure water, 35 mass% hydrochloric acid was added to adjust the pH of the suspension to 2.5, and the suspension was heated to 60°C to carry out the reaction for 6 hours, thereby obtaining a white slurry B. The white slurry B was filtered and washed to obtain 467 g of a white cake B with a water content of 60% and a total of 1060 mL of the filtrate and washing water. Lithium hydroxide was added to 1060 mL of the filtrate and washing water to adjust the pH to 7, the mixture was filtered, and 1060 mL of the resulting filtrate (filtrate 1) (the lithium chloride concentration was 92 g/L) was concentrated using the RO membrane. The resulting lithium chloride aqueous solution (the lithium chloride concentration was 200 g/L) was membrane-electrolyzed using an ion exchange membrane (Nafion N324 manufactured by The Chemours Company) under the conditions of a current density of 40 A/dm² and an electrode area of 0.7 dm² (the first membrane electrolysis step) to obtain 1100 g of a 6.2 mass% lithium hydroxide aqueous solution. Furthermore, by allowing the reaction product of the produced chlorine gas and hydrogen gas to be absorbed into water, 350 g of 30 mass% hydrochloric acid was also obtained. The recovery rate of lithium in the first membrane electrolysis step was 70.3%.

380 g of the 6.2 mass% lithium hydroxide aqueous solution was fractionated, and 80% by mass of the aqueous solution was crystallized to obtain 19.3 g (mass after drying) of crystals of lithium hydroxide monohydrate. In the lithium hydroxide monohydrate, the content of sodium was less than 50 ppm, the content of aluminum was less than 10 ppm, and the content of phosphorus was less than 10 ppm.

10.5 L of the filtrate and washing water obtained by filtration and washing of the white slurry A (the sodium chloride concentration was 98 g/L) was concentrated using the RO membrane, and the resulting sodium chloride aqueous solution (the sodium chloride concentration was 300 g/L) was membrane-electrolyzed using an ion exchange membrane (Nafion N324 manufactured by The Chemours Company) under the conditions of a current density of 40 A/dm², an electrode area of 1.75 dm², and an energization time of 4 hours to obtain 1.6 kg of 21.2 mass% sodium hydroxide. Furthermore, by allowing the reaction product of the produced chlorine gas and hydrogen gas to be absorbed into water, 1.04 kg of 30 mass% hydrochloric acid was also obtained.

Sodium hydroxide produced in the membrane electrolysis step could be reused in the sodium hydroxide addition step (STEP 2), the extraction step (STEP 3), and the separation step (STEP 4). Furthermore, hydrochloric acid synthesized in the membrane electrolysis step could be reused in the dissolution step (STEP 1). The current efficiency in the membrane electrolysis step was 81.5%.

In Examples 1 and 2, it was found that the mineral acid and alkali used could be regenerated and reused. Furthermore, it was also found that the purity of lithium carbonate obtained in the final stage of lithium recovery from waste lithium-ion batteries and the recovery rate of lithium were very high.

In the lithium recovery methods 1 to 14 of the present invention, at least one of sodium hydroxide and potassium hydroxide can be obtained directly in the second membrane electrolysis step for the alkali mixed salt aqueous solution, using an ion exchange membrane. Since the mineral acid and alkali produced in the second membrane electrolysis step can be circulated and utilized in the recovery method of the present invention, which enables a closed-loop recycling process. Furthermore, since the mineral acid and alkali can be circulated and utilized in the lithium recovery methods 1 to 14 of the present invention, the amount of carbon dioxide emissions generated in the distribution process for the mineral acid and alkali can be reduced compared to the case where the mineral acid and alkali are purchased from outside as has been done conventionally.

### Reference Signs List

1 Active material powder
2 Precipitate or metal sulfate aqueous solution
3 Lithium carbonate or lithium hydroxide monohydrate
4 Sodium hydroxide aqueous solution
5 Mineral acid
6 Sodium carbonate or Lithium carbonate
11, 21 Membrane electrolytic bath
12, 22 Anode plate
13, 23 Cathode plate
14, 24 Anode
15, 25 Cathode
16, 26 Ion exchange membrane
17, 27 Anode chamber
18, 28 Cathode chamber

## Claims

1. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
an alkali metal hydroxide re-addition step of re-adding at least one selected from the group consisting of sodium hydroxide and potassium hydroxide to a solution obtained in the neutralization step;
a separation step of separating each of a lithium salt and a salt of at least one selected from the group consisting of sodium and potassium from an alkali mixed salt aqueous solution obtained in the alkali metal hydroxide re-addition step; and
a lithium recovery step of recovering lithium from a first lithium salt aqueous solution obtained in the separation step.

2. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solid-liquid separation step of solid-liquid separating an insoluble product and a solution A obtained in the neutralization step;
a manganese extraction step of adding an organophosphorus-compound extraction solvent to the solution A to extract and separate manganese and to obtain a solution B;
a cobalt extraction step of adding an organophosphorus-compound extraction solvent to the solution B to extract and separate cobalt and to obtain a solution C;
a nickel extraction step of adding an organophosphorus-compound extraction solvent to the solution C to extract and separate nickel;
a separation step of separating each of a lithium salt and a salt of at least one selected from the group consisting of sodium and potassium from an alkali mixed salt aqueous solution obtained in the nickel extraction step; and
a lithium recovery step of recovering lithium from a first lithium salt aqueous solution obtained in the separation step.

3. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solid-liquid separation step of solid-liquid separating an insoluble product and a solution A obtained in the neutralization step;
a manganese extraction step of adding an organophosphorus-compound extraction solvent to the solution A to extract and separate manganese and to obtain a solution D;
a nickel extraction step of adding a hydroxime extraction solvent to the solution D to extract and separate nickel and to obtain a solution E;
a cobalt extraction step of adding an organophosphorus-compound extraction solvent to the solution E to extract and separate cobalt;
a separation step of separating each of a lithium salt and at least one salt of sodium and potassium from an alkali mixed salt aqueous solution obtained in the cobalt extraction step; and
a lithium recovery step of recovering lithium from a first lithium salt aqueous solution obtained in the separation step.

4. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solid-liquid separation step of solid-liquid separating an insoluble product and a solution A obtained in the neutralization step;
a cobalt extraction step of adding an organic-amine-compound extraction solvent to the solution A to extract and separate cobalt and to obtain a solution F;
a manganese extraction step of adding an organophosphorus-compound extraction solvent to the solution F to extract and separate manganese and to obtain a solution G;
a nickel extraction step of adding an organophosphorus-compound extraction solvent to the solution G to extract and separate nickel and to obtain a first lithium salt aqueous solution;
a separation step of separating each of a lithium salt and a salt of at least one selected from the group consisting of sodium and potassium from an alkali mixed salt aqueous solution obtained in the nickel extraction step; and
a lithium recovery step of recovering lithium from a first lithium salt aqueous solution obtained in the separation step.

5. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solid-liquid separation step of solid-liquid separating an insoluble product and a solution A obtained in the neutralization step;
a cobalt extraction step of adding an organic-amine-compound extraction solvent to the solution A to extract and separate cobalt and to obtain a solution H;
a nickel extraction step of adding a hydroxime extraction solvent to the solution H to extract and separate nickel and to obtain a solution I;
a manganese extraction step of adding an organophosphorus-compound extraction solvent to the solution I to extract and separate manganese and to obtain a first lithium salt aqueous solution;
a separation step of separating each of a lithium salt and a salt of at least one selected from the group consisting of sodium and potassium from an alkali mixed salt aqueous solution obtained in the manganese extraction step; and
a lithium recovery step of recovering lithium from a first lithium salt aqueous solution obtained in the separation step.

6. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solid-liquid separation step of solid-liquid separating an insoluble product and a solution A obtained in the neutralization step;
a nickel extraction step of adding a hydroxime extraction solvent to the solution A to extract and separate nickel and to obtain a solution J;
a manganese extraction step of adding an organophosphorus-compound extraction solvent to the solution J to extract and separate manganese and to obtain a solution K;
a cobalt extraction step of adding an organophosphorus-compound extraction solvent to the solution K to extract and separate cobalt and to obtain a first lithium salt aqueous solution;
a separation step of separating each of a lithium salt and a salt of at least one selected from the group consisting of sodium and potassium from an alkali mixed salt aqueous solution obtained in the cobalt extraction step; and
a lithium recovery step of recovering lithium from a first lithium salt aqueous solution obtained in the separation step.

7. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solid-liquid separation step of solid-liquid separating an insoluble product and a solution A obtained in the neutralization step;
a nickel extraction step of adding a hydroxime extraction solvent to the solution A to extract and separate nickel and to obtain a solution L;
a cobalt extraction step of adding an organic-amine-compound extraction solvent to the solution L to extract and separate cobalt and to obtain a solution M;
a manganese extraction step of adding an organophosphorus-compound extraction solvent to the solution M to extract and separate manganese and to obtain a first lithium salt aqueous solution;
a separation step of separating each of a lithium salt and at least one salt of sodium and potassium from an alkali mixed salt aqueous solution obtained in the manganese extraction step; and
a lithium recovery step of recovering lithium from a first lithium salt aqueous solution obtained in the separation step.

8. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solvent extraction step of separating at least one metal excluding lithium by organic-solvent extraction among metals contained in the active material powder from a solution obtained in the neutralization step to obtain an alkali mixed salt aqueous solution as a residual liquid of the solvent extraction;
a separation step of separating each of a lithium salt and a salt of at least one selected from the group consisting of sodium and potassium from the alkali mixed salt aqueous solution; and
a lithium recovery step of recovering lithium from a first lithium salt aqueous solution obtained in the separation step.

9. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solvent extraction step of extracting at least one selected from the group consisting of iron, aluminum, manganese, cobalt, and nickel contained in the active material powder with an organic solvent by solvent extraction from a solution obtained in the neutralization step;
a separation step of separating each of a lithium salt and a salt of at least one selected from the group consisting of sodium and potassium from an alkali mixed salt aqueous solution obtained in the solvent extraction step; and
a lithium recovery step of recovering lithium from a first lithium salt aqueous solution obtained in the separation step,
wherein, in the solvent extraction step, an aqueous solution containing at least one selected from the group consisting of sodium hydroxide and potassium hydroxide and the organic solvent are mixed, and then an alkali-containing organic solvent obtained by oil-water separation and a solution obtained in the neutralization step are mixed.

10. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a metal-sulfide removal step of mixing a solution obtained in the neutralization step and a sulfide at a pH in a range of 2 to 6 to produce a sulfide of at least one metal selected from the group consisting of copper, cadmium, lead, and mercury, and removing the metal sulfide;
a separation step of separating each of a lithium salt and a salt of at least one selected from the group consisting of sodium and potassium from an alkali mixed salt aqueous solution obtained in the metal-sulfide removal step; and
a lithium recovery step of recovering lithium from a first lithium salt aqueous solution obtained in the separation step.

11. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solvent extraction step of extracting at least one selected from the group consisting of iron, aluminum, manganese, cobalt, and nickel contained in the active material powder with an organic solvent by solvent extraction from a solution obtained in the neutralization step;
a separation step of separating each of a lithium salt and a salt of at least one selected from the group consisting of sodium and potassium from an alkali mixed salt aqueous solution obtained in the solvent extraction step;
a second membrane electrolysis step of membrane-electrolyzing an aqueous solution of a salt of at least one selected from the group consisting of sodium and potassium obtained in the separation step using an ion exchange membrane to obtain an alkali metal hydroxide aqueous solution;
a carbonation step of carbonating a part of the alkali metal hydroxide aqueous solution; and
a lithium recovery step of recovering lithium from a first lithium salt aqueous solution obtained in the separation step,
wherein the alkali metal hydroxide aqueous solution obtained in the second membrane electrolysis step is reused in at least one step selected from the group consisting of the neutralization step, the solvent extraction step, and the separation step, and
at least one selected from the group consisting of a mineral acid obtained by recovering gas produced in the second membrane electrolysis step and a mineral acid obtained in an anode chamber in the second membrane electrolysis step is reused in the dissolution step.

12. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solvent extraction step of extracting at least one selected from the group consisting of iron, aluminum, manganese, cobalt, and nickel contained in the active material powder with an organic solvent by solvent extraction from a solution obtained in the neutralization step;
a nickel removal step of mixing a first alkali mixed salt aqueous solution obtained in the solvent extraction step and an alkali to remove nickel contained in the first alkali mixed salt aqueous solution, and obtaining a second alkali mixed salt aqueous solution;
a separation step of separating each of a lithium salt and a salt of at least one selected from the group consisting of sodium and potassium from the second alkali mixed salt aqueous solution; and
a lithium recovery step of recovering lithium from a first lithium salt aqueous solution obtained in the separation step.

13. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solvent extraction step of extracting at least one selected from the group consisting of iron, aluminum, manganese, cobalt, and nickel contained in the active material powder with an organic solvent by solvent extraction from a solution obtained in the neutralization step;
a separation step of separating each of a lithium salt and a salt of at least one selected from the group consisting of sodium and potassium from an alkali mixed salt aqueous solution obtained in the solvent extraction step; and
a carbonation step of carbonating a first lithium salt aqueous solution obtained in the separation step to obtain lithium carbonate.

14. A method for recovering lithium from waste lithium-ion batteries, the method comprising:
a dissolution step of dissolving active material powder obtained by pre-processing waste lithium-ion batteries in a mineral acid;
a neutralization step of adding at least one selected from the group consisting of sodium hydroxide and potassium hydroxide to a solution obtained in the dissolution step;
a solvent extraction step of extracting at least one selected from the group consisting of iron, aluminum, manganese, cobalt, and nickel contained in the active material powder with an organic solvent by solvent extraction from a solution obtained in the neutralization step;
a separation step of separating each of a lithium salt and a salt of at least one selected from the group consisting of sodium and potassium from an alkali mixed salt aqueous solution obtained in the solvent extraction step; and
a first membrane electrolysis step of membrane-electrolyzing a first lithium salt aqueous solution obtained in the separation step using an ion exchange membrane to obtain a lithium hydroxide aqueous solution.

15. The method for recovering lithium from waste lithium-ion batteries according to any one of claims 1 to 10 and 12 to 14, further comprising a second membrane electrolysis step of membrane-electrolyzing an aqueous solution of a salt of at least one selected from the group consisting of sodium and potassium obtained in the separation step using an ion exchange membrane to obtain an alkali metal hydroxide aqueous solution.

16. The method for recovering lithium from waste lithium-ion batteries according to claim 15, wherein the alkali metal hydroxide aqueous solution obtained in the second membrane electrolysis step is reused in at least one step selected from the group consisting of the neutralization step, the solvent extraction step, and the separation step.

17. The method for recovering lithium from waste lithium-ion batteries according to any one of claims 1 to 12, wherein the lithium recovery step includes a carbonation step of carbonating the first lithium salt aqueous solution obtained in the separation step to obtain lithium carbonate.

18. The method for recovering lithium from waste lithium-ion batteries according to any one of claims 1 to 12, wherein the lithium recovery step further includes a first membrane electrolysis step of membrane-electrolyzing the first lithium salt aqueous solution obtained in the separation step using an ion exchange membrane to obtain a lithium hydroxide aqueous solution, an acid, and a second lithium salt aqueous solution that is more dilute than the first lithium salt aqueous solution.

19. The method for recovering lithium from waste lithium-ion batteries according to claim 18, wherein the second lithium salt aqueous solution is concentrated and added to the first lithium salt aqueous solution.

20. The method for recovering lithium from waste lithium-ion batteries according to any one of claims 1 to 14, wherein the mineral acid contains at least one selected from the group consisting of hydrochloric acid, sulfuric acid, and nitric acid.

21. The method for recovering lithium from waste lithium-ion batteries according to any one of claims 1 to 14, wherein the mineral acid contains hydrochloric acid.

22. The method for recovering lithium from waste lithium-ion batteries according to any one of claims 1 to 14, wherein hydrochloric acid produced by reacting chlorine and hydrogen obtained by membrane-electrolyzing the first lithium salt aqueous solution using an ion exchange membrane is used as the mineral acid.

23. The method for recovering lithium from waste lithium-ion batteries according to claim 14, wherein electric power used for the first membrane electrolysis step includes electric power obtained by renewable energy.

24. The method for recovering lithium from waste lithium-ion batteries according to claim 18, wherein electric power used for the first membrane electrolysis step includes electric power obtained by renewable energy.

25. The method for recovering lithium from waste lithium-ion batteries according to claim 11, wherein electric power used for the second membrane electrolysis step includes electric power obtained by renewable energy.

26. The method for recovering lithium from waste lithium-ion batteries according to claim 15, wherein electric power used for the second membrane electrolysis step includes electric power obtained by renewable energy.

27. The method for recovering lithium from waste lithium-ion batteries according to claim 23, wherein the electric power obtained by renewable energy includes at least one selected from the group consisting of electric power obtained by solar power generation, electric power obtained by wind power generation, and electric powder obtained by hydroelectric power generation.

28. The method for recovering lithium from waste lithium-ion batteries according to claim 24, wherein the electric power obtained by renewable energy includes at least one selected from the group consisting of electric power obtained by solar power generation, electric power obtained by wind power generation, and electric powder obtained by hydroelectric power generation.

29. The method for recovering lithium from waste lithium-ion batteries according to claim 25, wherein the electric power obtained by renewable energy includes at least one selected from the group consisting of electric power obtained by solar power generation, electric power obtained by wind power generation, and electric powder obtained by hydroelectric power generation.

30. The method for recovering lithium from waste lithium-ion batteries according to claim 26, wherein the electric power obtained by renewable energy includes at least one selected from the group consisting of electric power obtained by solar power generation, electric power obtained by wind power generation, and electric powder obtained by hydroelectric power generation.

31. The method for recovering lithium from waste lithium-ion batteries according to claim 13 or 14, wherein the separation step is carried out by at least one selected from the group consisting of a lithium phosphate method, an evaporative concentration method, and a solvent extraction method.

32. The method for recovering lithium from waste lithium-ion batteries according to claim 13 or 14, further comprising a second membrane electrolysis step of membrane-electrolyzing an aqueous solution of a salt of at least one selected from the group consisting of sodium and potassium obtained in the separation step using an ion exchange membrane to obtain an alkali metal hydroxide aqueous solution, wherein the aqueous solution of a salt of at least one selected from the group consisting of sodium and potassium is concentrated, and the concentrated aqueous solution of a salt of at least one selected from the group consisting of sodium and potassium is electrolyzed in the second membrane electrolysis step.
